Europäisches Patentamt

European Patent Office

Office européen des brevets

(19)

(11) **EP 1 100 049 A2**

(12) # EUROPEAN PATENT APPLICATION

(43) Date of publication:
**16.05.2001 Bulletin 2001/20**

(51) Int Cl.[7]: **G06T 9/00**

(21) Application number: **00310040.1**

(22) Date of filing: **10.11.2000**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **12.11.1999 US 438857**

(71) Applicant: **Wada, Ayao**
**Tokyo 145 (JP)**

(72) Inventor: **Otto, Anthony H.**
**Redondo Beach, CA 90277-2870 (US)**

(74) Representative:
**McLeish, Nicholas Alistair Maxwell et al**
**Boult Wade Tennant**
**Verulam Gardens**
**70 Gray's Inn Road**
**London WC1X 8BT (GB)**

(54) **Method for digital compression of color images**

(57)     The method for digital compression of color images digitally compresses color photographs for storage or transmission of rectangular images. The method operates in the YCrCb color space and includes a novel color space conversion method for converting digital image data from a 15- or 24-bit RGB (Red-Green-Blue) color space to the YCrCb (Luminance-Chrominance) color space. The compression method uses a lookup table for color space conversion.

*FIG. 4*

**Description**

BACKGROUND OF THE INVENTION

Field of the Invention:

The invention relates generally to information signal processing, and more particularly relates to digital compression of color images.

Description of Related Art:

One technique that has been used in digital encoding of image information is known as run length encoding. In this technique, the scan lines of a video image are encoded as a value or set of values of the color content of a series of pixels along with the length of the sequence of pixels having that value, set of values, or range of values. The values may be a measure of the amplitude of the video image signal, or other properties, such as luminance or chrominance. Statistical encoding of frequent color values can also be used to reduce the number of bits required to digitally encode the color image data.

One basic encoding process is based upon the block truncation coding (BTC) algorithm published by Mitchell and Delp of Purdue University in 1979. The basic BTC algorithm breaks an image into 4x4 blocks of pixels and calculates the first and second sample moments. Based upon an initial discriminator value, set to the first sample moment (the arithmetic mean), a selection map ofthose pixels lighter or darker than the discriminator value is determined, along with a count of the lighter pixels. From the first and second sample moments, the sample variance, and therefore, the standard deviation, can be calculated. The mean, standard deviation, and selection map are preserved for each block. However, the original BTC method is limited to a grayscale image, so that it would be desirable to adapt the BTC method to extend the BTC method to include YCrCb full-color. It would also be desirable to adapt the BTC method to handle delta values, allowing multi-level, or hierarchical, encoding and allowing encoding of differences between frames or from a specified background color.

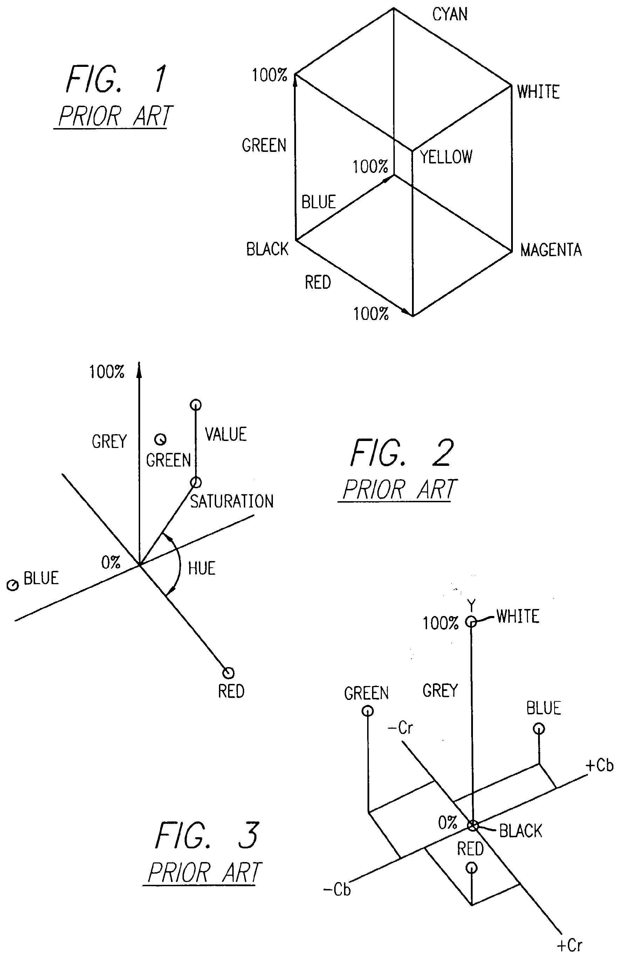

The range of color values for any given pixel in a color image can be described, for example, as RGB color space, illustrated in Fig. 1, that can be represented by a conventional three-dimensional Cartesian coordinate system, with each axis representing 0 to 100% of the red, green and blue values for the color value of the pixel. A grayscale line can be described as running diagonally from black at 0% of each component to white at 100% of each. Since human vision can only discriminate a limited number of shades of color values, by selecting representative color values in such a color space, a limited number of color values can be used to approximate the actual color values of an image such that the human eye can not differentiate between the actual color values and the selected color values.

As is illustrated in Figs. 2 and 3, human vision can be characterized by the Hue-Value-Saturation (HVS) color system. Hue is defined as the particular color in the visible spectrum ranging from red through green and blue to violet. Value is defined as the brightness level, ignoring color. Saturation is defined as the intensity of the particular color or the absence of other shades in the mixture. The HVS system can be represented by a generally cylindrical coordinate system with a polar base consisting of hue as the angle, and saturation as the radius. The value or brightness component is represented as the altitude above the base. The actual visible colors do not occupy the entire cylinder, but are approximately two cones, base to base with their vertices at 0% up to 100% on the value scale. The base is tilted in this example because the maximum saturation for blue occurs at a much lower brightness than the maximum saturation of green.

Referring to Fig. 2, in order to represent digitized NTSC/PAL video in a Cartesian coordinate system, the YCrCb color space is used. Because the method of the invention operates in the YCrCb color space, the method provides for a novel color space conversion method from 15- or 24-bit RGB. Eight-bit grayscale images are also supported. Referring also to Fig. 3, the chrominance components, Cr and Cb, are two axes that correspond to the polar hue and saturation components in the HVS system. The Y, or luminance, component corresponds to the brightness axis in the HVS graph. This description does not account for the slight differences between YIQ and YUV for NTSC- and PAL-based encoding, which does not form a part of the invention. The following equations can be used to convert from RGB to the YCrCb color space:

$$Y = 0.299R + 0.587G + 0.114B$$

$$Cr = 0.713 (0.701R - 0.587G - 0.114B)$$

$$Cb = 0.564 \ (-0.299R - 0.587G + 0.866B)$$

Typical implementations of digitally representing color values in this fashion use floating point arithmetic (11 multiplications and 9 additions/subtractions per pixel) or 16-bit integer arithmetic (9 multiplications, 9 additions/subtractions and 3 division per pixel). Both of these methods are quite wasteful of computing power, particularly on smaller microcontrollers. There is thus a need for a method for representing color values of digitized images that takes advantage of the limitations of human vision in discriminating color in color images in order to reduce the software and hardware requirements.

Unfortunately, noise can seriously interfere with the efficiency of any image compression process, lossy or lossless, because a compression engine must use more unnecessary data to encode noise as if it were actual subject material. Since lossy compression tends to amplify noise creating more noticeable artifacts upon decompression, lossy compression processes therefore typically attempt to remove some of the noise prior to compressing the data. Such preprocessing filters must be used very carefully, because too little filtering will not have the desired result of improved compression performance, and too much filtering will make the decompressed image cartoon-like.

Another method used for removing unwanted noise from color image data is chromakeying, which is a process of replacing a uniform color background (usually blue) from behind a subject. A common application of this process is a television weather reporter who appears to be standing in front of a map. In actuality, the reporter is standing in front of a blue wall while a computer generated map is replacing all of the blue pixels in the image being broadcast.

While preprocessing filters can remove noise from the area surrounding a subject of interest in an image, subtle changes in lighting or shading can remain in the original image which can be eliminated by chromakeying. There is thus a need to provide a chromakey method in compression of color images for storage on smart cards and databases, in order to replace the background with a solid color to increase the visual quality of the compressed image. It would also be desirable to automate and simplify the chromakey process, to simplify the chromakey process for the operator.

Thus, there remains a requirement for color image compression that is both accurate and utilizes less computing resource and memory than systems that are presently available. The present invention solves these and other needs.

SUMMARY OF THE INVENTION

The present invention provides for an improved method for digitally compressing color images. The method of the invention is designed for very low computational power implementations such as 8-bit microcontrollers, possibly with an ASIC accelerator.

Briefly, and in general terms, the present invention accordingly provides for a method for digital compression of an image for storage or transmission of the image, the image containing image data consisting of a plurality of scan lines of pixels with scalar values, by the steps of filtering the image data by evaluating the scalar values of individual pixels in the image with respect to neighboring pixels, and statistically encoding the image data by dividing the image into an array of blocks of pixels, and encoding each block of pixels into a fixed number of bits that represent the pixels in the block.

In a presently preferred embodiment of the method of digitally compressing an image, the step of filtering comprises evaluating each the individual pixel as a target pixel and a plurality of pixels in close proximity to the target pixel to determine an output value for the target pixel. Presently, step of filtering preferably comprises evaluating a sequence of five pixels, including two pixels on either side of the target pixel and the target pixel itself, for each target pixel. In one presently preferred approach, the step of filtering comprises determining an average of the data for a window of the pixels immediately surrounding the target pixel for those pixels surrounding the target pixel that are within a specified range of values, according to the following protocol: if all five pixels are within the specified range, the output target pixel is determined to be the average of the four pixels in a raster line, two on each side of the target pixel; if the two pixels on either side are within a specified range and both sides themselves are within the range, the filtered output target pixel data is determined to be the average of the two pixels on each side of the target pixel; if the two pixels on either side of the target pixel and the target pixel itself are within a specified range, and the other two pixels on the other side are not within the specified range, the output target pixel is determined to be the average of the two neighboring pixels closest in value to the target pixel values and that fall within the specified range; if the five pixels are all increasing or decreasing, or are within a specified range, the output target pixel is determined to be the average of two pixels on whichever side of the target pixel is closest in value to the target pixel; and if the five pixels in the window do not fit into any of the prior cases, the output target pixel is unchanged.

Statistically encoding the image data, in a presently preferred aspect of the method of digitally compressing an image comprises dividing the image into an array of 4x4 squares of pixels, and encoding each 4x4 squre of pixels into a fixed bit length block containing a central color value, color dispersion value, and a selection map that represent the sixteen pixels in the block.

One currently preferred embodiment provides that each block contains a central color value and a color dispersion value, and the step of statistically encoding the image data comprises determining a first sample moment of each block as the arithmetic mean of the pixels in the block, and the central color value of each block is set to the arithmetic mean from the first sample moment of the pixels in the block. One presently preferred option of this embodiment involves determining a second sample moment of the pixels in the block, and determining the color dispersion value of each the block by determining the standard deviation from the first and second sample moments. Another presently preferred option of this embodiment involves determining a first absolute moment by determining an average of the difference between the pixel values and the first sample moment, and wherein the color dispersion value is set to the first absolute moment.

Another preferred aspect ofthe method of digitally compressing an image further comprises the step of converting digital color image data to the YCrCb color space. In one currently preferred approach, the step of converting digital color image data to the YCrCb color space comprises converting the color image data from the RGB color space. Preferably, the step of converting digital color image data to the YCrCb color space comprises utilizing lookup tables of selected color values for color space conversion, and in one preferred approach, the step of converting digital color image data to the YCrCb color space comprises utilizing nine 256-entry one-byte lookup tables containing the contribution that each R, G and B make towards the Y, Cr and Cb components.

Statistically encoding the image data, in another presently preferred aspect of the method of digitally compressing an image comprises determining a first sample moment of each block as the arithmetic mean of the pixels in the block, determining a second sample moment of the pixels in the block, and determining the selection map from those pixels in the block having values lighter or darker than the first sample moment.

In another presently preferred aspect of the method of digitally compressing an image, the step of statistically encoding the image data comprises determining a first sample moment of each block as the arithmetic mean of the pixels in the block, determining a second sample moment of the pixels in the block, and determining the selection map from those pixels in the block having values lighter or darker than the average of the lightest and darkest pixels in the block.

The step of statistically encoding the image data, in another presently preferred embodiment, comprises determining a classification of each block, quantifying each block, and compressing each block by codebook compression using minimum redundancy, variable-length bit codes. In one presently preferred aspect, this step of classifying each the block comprises classifying each the block according to a plurality of categories, and in a presently preferred embodiment, the step of classifying each the block comprises classifying each of the blocks in one of four categories: null blocks exhibiting little or no change from the higher level or previous frame, uniform blocks having a standard deviation less than a predetermined threshold, uniform chroma blocks having a significant luminance component to the standard deviation, but little chrominance deviation, and pattern blocks having significant data in both luminance and chrominance standard deviations. The step of statistically encoding the image data can also further comprise determining the number of bits to be preserved for each component of the block after each block is classified. In one presently preferred variant, this can also further involve the step of selecting a quantizer defining the number of bits to be preserved for each component of the block according to the classification of the block to preserve a desired number of bits for the block. In another presently preferred variant, the number of bits for the Y and Cr/Cb components of the blocks to be preserved are determined independently for each classification. In a currently preferred option, all components of each block for pattern blocks are preserved. In another currently preferred option, the mean luminance and chrominance, standard deviation luminance, and a selection map for uniform chroma blocks are preserved. In another currently preferred option, all three color components of the central color value for uniform blocks are preserved. In another currently preferred option, the run length of null blocks are recorded without preserving components of the null blocks. In another preferred embodiment, the step of determining a classification of each block involves matching the texture map of the block with one of a plurality of common pattern maps for uniform chroma and pattern classified blocks, and the step of compressing each block by codebook compression can comprise selecting codes from multiple codebooks.

The digital image compression method of the invention also uses a hierarchical, or multilevel component. Each image is first divided into an array of 4 x 4 level-one blocks. Then 4 x 4 blocks of representative values from the level-one are encoded into higher level, or level-two blocks of central color values. Each level two block describes a lower resolution 16 x 16 pixel image. The process continues to 64 x 64, 256 x 256, and even 1024 x 1024 pixel blocks. The number of levels are selected so that four to fifteen top level blocks in each dimension remain. The compression system of the invention uses only two levels. In a presently preferred aspect of the method of the invention, the step of statistically encoding the image data comprises dividing the image into an array of 4x4 squares of pixels, and multilevel encoding the central color values of each 4x4 square of lower level blocks. In one currently preferred option, the step ofmulti-level encoding is repeated until from four to fifteen blocks remain on each axis of a top level of blocks. In a preferred variation of this option, the top level of blocks is reduced to residuals from a fixed background color. In an alternate preferred option, each successive lower level block is reduced to the residuals from the encoded block on the level above. In another alternate preferred option, the pixel values are reduced to the residuals from the encoded level one blocks.

Another aspect of the digital image compression method of the invention currently preferably involves preparing a datastream for storage or transmission in level order. In an alternate preferred embodiment, the method of the invention involves preparing a datastream for storage or transmission in block order. Another currently preferred embodiment of the method of the invention further involves the step of adding compressed residuals between input pixel data and level-one decoded blocks to thereby provide loss-less digital compression of the image.

In another presently preferred embodiment, the method of digitally compressing an image further comprises the step of decompressing each block. In one preferred aspect, the step of decompressing comprises decompressing each block by codebook decompression. In another presently preferred embodiment, for a datastream in level order, the step of decompressing comprises decoding the blocks in level order by decoding all of the blocks in a level of blocks according to level, progressing from the highest level to the lowest level of blocks. In a preferred alternate approach, for a datastream in block order, the step of decompressing comprises decoding blocks in block order, by decoding each top level block in succession, and progressively decoding each of the lower level blocks within the top level block before decoding each successive top level block, and displaying selected portions of the image without processing unneeded blocks. A presently preferred aspect provides that the step of decompressing comprises restoring the components of the blocks to the original number of bits based upon block classification; and for blocks encoded with a mean, standard deviation, and selection map, the step of decompressing preferably comprises the steps of determining a first color "a" for each block of pixels, based upon the mean, standard deviation, and selection map for each block of pixels, and placing the first color "a" color in the corresponding pixel position where a one occurs in the selection map. In another presently preferred approach, for blocks encoded with a mean, standard deviation, and selection map, the step of decompressing comprises the steps of determining a second color "b" for each block of pixels, based upon the mean, standard deviation, and selection map for each block of pixels, and placing the second color "b" in the corresponding pixel position where a zero occurs in the selection map.

In another presently preferred approach, for blocks encoded with a mean, standard deviation, and selection map, the step of decompressing comprises determining a first color "a" and a second color "b" for each block of pixels, based upon the mean, standard deviation, and selection map for each block of pixels, where the mean is "$\overline{X}$", the standard deviation "$\overline{\sigma}$", the number of one bits in the selection map darker than the mean is "q", and the total number of bits in the selection map is "m", according to the following formulas:

$$a = \overline{X} - \overline{\sigma}\sqrt{\left[\frac{q}{m-q}\right]}$$

$$b = \overline{X} - \overline{\sigma}\sqrt{\left[\frac{m-q}{q}\right]}$$

for each of the Y, Cr, and Cb components of the "a" color and "b" color. In a presently preferred variation this approach involves the step of utilizing a map of coefficients to smooth the boundaries between the decoded "a" and "b" colors to describe gradient areas of the original image. In another presently preferred variation, this approach further involves the step of utilizing a lookup table of coefficients for the multiplier involving "q" and "m" for the standard deviation value "$\overline{\sigma}$" to reduce computation time.

For blocks encoded with an absolute central moment and selection map, step of decompressing preferably comprises determining a first color "a" and a second color "b" for each block of pixels, based upon the absolute central moment and selection map for each block of pixels, where "x" is the sample mean (or central color value, or arithmetic mean), the number of one bits in the selection map darker than the absolute central moment is "q", and the total number of bits in the selection map is "m", according to the following formulas:

$$a = x + d/q$$

$$b = x + d/(m-q)$$

where "d" is the absolute central moment, for each of the Y, Cr, and Cb components of the "a" color and "b" color.

In a presently preferred embodiment, the step of decompressing further comprises processing the image by layering a plurality of filters. This step of processing the image by layering a plurality of filters in one presently preferred aspect comprises the step of filtering areas of the decompressed image to introduce variations in luminance to a decoded uniform color portion of the decompressed image. In another presently preferred aspect, the step of processing the image by layering a plurality of filters comprises the step of filtering edges of the blocks of the decompressed image to mask artifacts occurring at the edges of the blocks. In another presently preferred aspect, the step of processing the image by layering a plurality of filters comprises filtering areas of the decompressed image utilizing a convolution mask around a selected target pixel in an area of the decompressed image, the convolution mask consisting of five pixels including the target pixel, one pixel above the target pixel, one pixel below the target pixel, one pixel to the left of the target pixel, and one pixel to the right of the target pixel, and the divisors are multiples of two, matching the central target pixel with the target pixel of the decoded image, and determining the filtered value of a target pixel of the decompressed image as the sum of the products of the five pixels of the spatial filter and the corresponding pixels of the decoded image with relation to the target pixel of the image, divided by the divisor.

Another presently preferred aspect of the method of the invention further involves the step of converting the YCrCb color space image data back to the original color image color space. In a presently preferred variation, this can comprise converting the YCrCb color space image data back to the original image or other desired color space, and this preferably involves utilizing lookup tables of selected color values for color space conversion. In a preferred aspect, five 256-entry lookup tables are utilized.

The present invention also provides for a method for digital compression of a color image such as a color identification photograph for storage of the color image, the color image containing color image data consisting of a plurality of scan lines of pixels with color values, comprising the steps of filtering the color image data by evaluating the color values of individual pixels in the color image with respect to neighboring pixels, and statistically encoding the color image data by dividing the color image into an array of blocks of pixels, and encoding each block of pixels into a fixed number of bits that represent the pixels in the block. In a presently preferred embodiment, the step of filtering comprises evaluating each individual pixel as a target pixel and a plurality of pixels in close proximity to the target pixel to determine an output value for the target pixel. In a presently preferred aspect of the method of the invention, the step of filtering comprises evaluating a sequence of five pixels, including two pixels on either side of the target pixel and the target pixel itself, for each target pixel.

In another presently preferred aspect of the method of digital compression of a color image, the step of filtering comprises determining an average of the data for a window of the pixels immediately surrounding the target pixel for those pixels surrounding the target pixel that are within a specified range of values, according to the following protocol: if all five pixels are within the specified range, the output target pixel is determined to be the average of the four pixels in a raster line, two on each side of the target pixel; if the two pixels on either side are within a specified range and both sides themselves are within the range, the filtered output target pixel data is determined to be the average of the two pixels on each side of the target pixel; if the two pixels on either side of the target pixel and the target pixel itself are within a specified range, and the other two pixels on the other side are not within the specified range, the output target pixel is determined to be the average of the two neighboring pixels closest in value to the target pixel values and that fall within the specified range; if the five pixels are all increasing or decreasing, or are within a specified range, the output target pixel is determined to be the average of two pixels on whichever side of the target pixel is closest in value to the target pixel; and if the five pixels in the window do not fit into any of the prior cases, the output target pixel is unchanged.

A currently preferred aspect of the method of digitally compressing a color image further comprises replacing background in the image being compressed with a scalar value, in order to reduce noise in the image, and to increase the visual quality of the compressed image. In a currently preferred embodiment, the step of replacing background in the image being compressed with a scalar value comprises setting an initial chromakey value and delta values. In a preferred aspect, the step of setting an initial chromakey value and background scalar value comprises capturing one or more calibration images of the background prior to capturing an image without a subject of interest in place, consisting substantially of background pixels, and determining the average and standard deviation of one or more calibration images to set at least an initial chromakey scalar value and range. In another currently preferred aspect, the step of setting an initial chromakey value and background scalar value comprises capturing an image with a subject of interest in place, and beginning in the upper-left and upper-right corners of the one or more calibration images, collecting pixel data down and towards the center of the image until an edge or image boundary is encountered, and determining the average and standard deviation of those pixels to set at least an initial chomakey value and range. In one preferred aspect, the pixel data are collected from a plurality of images. In another currently preferred aspect, the step of setting an initial chromakey value and background scalar value comprises manually specifying an initial chromakey value and range without respect to the properties of an individual image being captured prior to image capture. Preferably the step of replacing background in the image being compressed comprises determining an initial chromakey mask of pixels in the input image that are near the chromakey value. In a currently preferred aspect, three delta components are used to describe a rectangular region in YCrCb color space. In another preferred aspect, one delta component describes a spherical region in YCrCb color space. The three delta components can in an alternate preferred embodiment describe a hollow cylindrical segment in HSV color space.

Additionally, the method of digitally compressing a color image can further comprise the step of removing artifacts from the initial chromakey mask. In one presently preferred embodiment, the step of removing artifacts comprises the steps of: a) initially determining the background mask set of pixels; b) removing pixels from the mask set that have less than a predetermined threshold of neighboring pixels included in the mask set; c) adding pixels to the mask set that have more than a predetermined threshold of neighboring pixels included in the mask set; and repeating steps b) and c) a plurality of times.

In an alternate preferred approach in the method of digitally compressing a color image, the step of removing artifacts comprises the steps of: applying a sliding linear filter of five pixels once horizontally and once vertically to adjust a plurality of target pixels of the initial chromakey mask, and adjusting each target pixel to be included in the chromakey mask if the target pixel is initially not included in the chromakey mask, the pair of pixels on either side of the target pixel are in the chromakey mask, and the target pixel is not near an edge; adjusting each target pixel to be included in the chromakey mask if the target pixel is initially not included in the chromakey mask, and the two adjacent pixels on either side of the target pixel are included in the chromakey mask; adjusting each target pixel to be included in the chromakey mask if the target pixel is initially not included in the chromakey mask, and if three of the adjacent pixels a distance of two or less pixels away from the target pixel are included in the chromakey mask; adjusting each target pixel to be excluded from the chromakey mask if the target pixel is initially included in the chromakey mask, and if both pairs of pixels on either side of the target pixel are not included in the chromakey mask.

The term "background" is used herein to identify the area around a subject in an image. A significant part of replacing background in the color image being compressed with a solid color comprises determining an initial chromakey value and range of the colors in the background. The term "background color" is used herein to mean a fixed color that is subtracted from each pixel in a specified background area of an image prior to level one encoding, and can be either be copied from a replacement color or supplied by an operator. The term "chromakey color" and "chromakey" refer particularly to the color that is the center of a specified area of colors that are to be replaced, generally calculated from the accumulated pixels in the area, or supplied by an operator. The "replacement color" is a fixed color that is used to replace all pixels indicated in the final chromakey mask, and it can be either copied from the chromakey color, or supplied by an operator. In one presently preferred embodiment, the step of calibrating comprises capturing at least one calibration image of the background prior to capturing an image with a subject of interest in place, consisting substantially of background pixels, and determining the average and standard deviation of the at least one calibration image to set at least an initial chromakey color and range. The term "chromakey range" is used herein to refer to the amount that pixels can differ from the chromakey color and be included in the pixels to be replaced, and is also calculated from the accumulated pixels or is supplied by an operator.

Another preferred aspect of the method of digitally compressing a color image further comprises the step of converting digital color image data to the YCrCb color space. In one currently preferred approach, the step of converting digital color image data to the YCrCb color space comprises converting the color image data from the RGB color space. Preferably, the step of converting digital color image data to the YCrCb color space comprises utilizing lookup tables of selected color values for color space conversion, and in one preferred approach, the step of converting digital color image data to the YCrCb color space comprises utilizing nine 256-entry one-byte lookup tables containing the contribution that each R, G and B make towards the Y, Cr and Cb components.

In one presently preferred embodiment of the method for digital compression of a color image such as a color identification photograph for storage of the color image, the step of statistically encoding the color image data comprises dividing the color image into an array of 4x4 squares of pixels, and encoding each 4x4 square of pixels into a fixed number of bits containing a central color value, color dispersion value, and a selection map that represent the sixteen pixels in the block.

Typically, each of the blocks contains a central color value and a color dispersion value, and the step of statistically encoding the image data comprises determining a first sample moment of each block as the arithmetic mean of the pixels in the block, and the central color value of each block is set to the arithmetic mean from the first sample moment of the pixels in the block. One presently preferred option of this embodiment involves determining a second sample moment of the pixels in the block, and determining the color dispersion value of each block by determining the standard deviation from the first and second sample moments. Another presently preferred option of this embodiment involves determining a first absolute moment by determining an average of the difference between the pixel values and the first sample moment, and wherein the color dispersion value is set to the first absolute moment.

In another presently preferred aspect of the method of digital compression of color image, the step of statistically encoding the image data comprises determining a first sample moment of each block as the arithmetic mean of the pixels in the block, determining a second sample moment of the pixels in the block, and determining said selection map from those pixels in the block having values lighter or darker than the first sample moment. Alternatively, the selection map can be determined from those pixels in the block having values lighter or darker than the average of the lightest and darkest pixels in the block.

Another presently preferred embodiment of the method for digitally compressing a color image provides for statistically encoding the color image data by encoding two levels of blocks of each 4x4 square of pixels, with the two levels including level one blocks and level two blocks, and the level two blocks including central color values. In one preferred aspect, the level two blocks are reduced to residuals from a fixed background color, and in another presently preferred aspect, the level one blocks are reduced to residuals from decoded level two blocks.

The present invention also provides for a method for digital compression of an image for storage or transmission of the image, with the image containing image data consisting of a plurality of scan lines of pixels with scalar values. The image data is filtered by evaluating the scalar values of individual pixels in the image with respect to neighboring pixels. The image data is statistically encoded by dividing the image into an array of blocks of pixels, and encoding each block of pixels into a fixed number of bits that represent the pixels in the block by classifying each said block, quantifying each said block, and compressing each said block by codebook compression using minimum redundancy, variable-length bit codes.

In one presently preferred embodiment of the method of digital compression of an image, each said block is classified according to a plurality of categories. In one preferred aspect, each of the blocks are classified in one of four categories: 1) null blocks exhibiting little or no change from the higher level or previous frame, 2) uniform blocks having a standard deviation less than a predetermined threshold, 3) uniform chroma blocks having a significant luminance component to the standard deviation, but little chrominance deviation, and 4) pattern blocks having significant data in both luminance and chrominance standard deviations. In one preferred option the number of bits to be preserved can be determined for each component of the block after each said block is classified. Additionally, a quantizer can be selected defining the number of bits to be preserved for each component of the block according to the classification of the block to preserve a desired number of bits for the block. In another presently preferred option, the number of bits for the Y and Cr/Cb components of the blocks to be preserved are determined independently for each classification. All components of each block can be preserved for pattern blocks, and all components of a central color, the mean luminance and chrominance, standard deviation luminance, and a selection map can be preserved for uniform chroma blocks. In another option, all three components of the central color value can be preserved for uniform blocks. Additionally, one preferred implementation provides for recording the run length of null blocks without preserving components of the null blocks.

The method for digital compression of an image for storage or transmission of the image can further comprise the step of matching the texture map of the block with one of a plurality of common pattern maps for uniform chroma and pattern classified blocks; and the step of compressing each said block by codebook compression can involve selecting codes from multiple codebooks.

The invention also provides for a method for digital compression of an image for storage or transmission of the image, with the image containing image data consisting of a plurality of scan lines of pixels with scalar values. According to the method, the image data is filtered by evaluating the scalar values of individual pixels in the image with respect to neighboring pixels, and the image data is statistically encoded by dividing the image into an array of blocks of pixels and encoding each block of pixels into a fixed number of bits that represent the pixels in the block. A datastream is then prepared for storage or transmission in block order.

In one presently preferred embodiment of the method of digital compression of an image, the step of preparing a datastream for storage or transmission in block order comprises selecting a block order to first process those portions of the image that are most important to facial identification. In one preferred option, the block order provides a circle group layout. In another presently preferred option, the comers of the image are truncated. In one preferred aspect, the block order provides an oval group layout, and in a preferred option, the corners of the image are truncated. Alternatively, the block order can provide a bell group layout, and the comers of the image may also be truncated.

In another aspect of the method of compressing an image, the step of preparing a datastream for storage or transmission in block order comprises dividing the blocks into groups. The blocks can, for example, be divided into groups by assigning a portion of the maximum compressed bytes to each group. In addition, the step of dividing the blocks into groups can also involve adjusting quality-controlling thresholds upon completion of each group. In a preferred aspect, only level two block information is transmitted on the last block to be processed if the information is near a maximum limit of compressed bytes. The compression of the image can also be repeated starting at a lower quality level if necessary to process the entire image into a maximum limit of compressed bytes.

The invention also provides for a method for digital compression and decompression of a color image such as a color identification photograph for storage of the color image, with the color image containing color image data consisting of a plurality of scan lines of pixels with color values, by the steps of filtering the color image data by evaluating the color values of individual pixels in the color image with respect to neighboring pixels, statistically encoding the color image data by dividing the color image into an array of blocks of pixels and encoding each block of pixels into a fixed number of bits that represent the pixels in the block, and decompressing each block. In one presently preferred embodiment, the step of decompressing each block comprises decompressing each block by codebook decompression.

In a presently preferred aspect of the method of compressing and decompressing a color image, the components of the blocks are restored to the original number of bits based upon block classification. For blocks encoded with a mean, standard deviation, and selection map, the decompression preferably comprises the steps of determining a first color "a" for each block of pixels, based upon the mean, standard deviation, and selection map for each said block of pixels, and placing the first color "a" color in the corresponding pixel position where a one occurs in the selection map. For blocks encoded with a mean, standard deviation, and selection map, the decompression comprises the steps of determining a second color "b" for each block of pixels, based upon the mean, standard deviation, and selection map for each said block of pixels, and placing the second color "b" in the corresponding pixel position where a zero occurs in the selection map. In a presently preferred embodiment, for blocks encoded with a mean, standard deviation, and selection map, the decompression comprises determining a first color "a" and a second color "b" for each block of pixels, based upon the mean, standard deviation, and selection map for each said block of pixels, where the mean is "$\overline{X}$", the standard deviation "$\overline{\sigma}$", the number of one bits in the selection map darker than the mean is "q", and the total number of bits in the selection map is "m", according to the following formulas:

$$a = \overline{X} - \overline{\sigma}\sqrt{\left[\frac{q}{m-q}\right]}$$

$$b = \overline{X} - \overline{\sigma}\sqrt{\left[\frac{m-q}{q}\right]}$$

for each of the Y, Cr, and Cb components of the "a" color and "b" color.

In a presently preferred option, a lookup table of coefficients is utilized for determining the multiplier involving "q" and "m" for the standard deviation value "$\overline{\sigma}$ " to reduce computation time.

In another presently preferred embodiment of the method for compression and decompression of a color image, for blocks encoded with an absolute central moment and selection map, the decompression comprises determining a first color "a" and a second color "b" for each block of pixels, based upon the absolute central moment and selection map for each block of pixels, where "x" is the sample mean (or central color value, or arithmetic mean), the number of one bits in the selection map darker than the absolute central moment is "q", and the total number of bits in the selection map is "m", according to the following formulas:

$$a = x + d/q$$

$$b = x + d/(m-q)$$

where "d" is the absolute central moment, for each of the Y, Cr, and Cb components of the "a" color and "b" color. In a preferred aspect, a map of coefficients can be used to smooth the boundaries between the decoded "a" and "b" colors to describe gradient areas of the original image.

In another currently preferred aspect of the method of compressing and decompressing a color image, the step of decompressing of the color image further comprises the step of processing the image by layering a plurality of filters. This can, for example, involve layering a plurality of filters by filtering areas of the decompressed image to introduce variations in luminance to a decoded uniform color portion of the decompressed image. Processing the image by layering a plurality of filters may also involve filtering edges of said blocks of the decompressed image to mask artifacts occurring at the edges of the blocks.

In another aspect of the method of compressing and decompressing color images, the step of processing the image by layering a plurality of filters comprises filtering areas of the decompressed image utilizing a convolution mask around a selected target pixel in an area of the decompressed image. The convolution mask can consist, for example, of five pixels including the target pixel, one pixel above the target pixel, one pixel below the target pixel, one pixel to the left of the target pixel, and one pixel to the right of the target pixel, and wherein the divisors are multiples of two. The central target pixel is matched with the target pixel of the decoded image, and the filtered value of a target pixel ofthe decompressed image is determined as the sum of the products of the five pixels of the spatial filter and the corresponding pixels of the decoded image with relation to the target pixel of the image, divided by the divisor.

In another presently preferred aspect, the method of digital compression and decompression of a color image can further comprise the step of converting the YCrCb color space image data back to the original color image color space, to the original image or other desired color space. In a presently preferred option, lookup tables of selected color values are utilized for color space conversion, and in a current preferred implementation of the method, the step of converting digital color image data to the YCrCb color space comprises utilizing five 256-entry lookup tables.

These and other aspects and advantages of the invention will become apparent from the following detailed description and the accompanying drawings, which illustrate by way of example the features of the invention.

BRIEF DESCRIPTION OF THE DRAWINGS

Figure 1 is a schematic representation of an RGB color space known in the prior art;
Fig. 2 is a schematic representation ofNTSC/PAL video color system in the HVS color space known in the prior art;
Fig. 3 is a schematic representation ofNTSC/PAL video color system in the YCrCb color space known in the prior art;

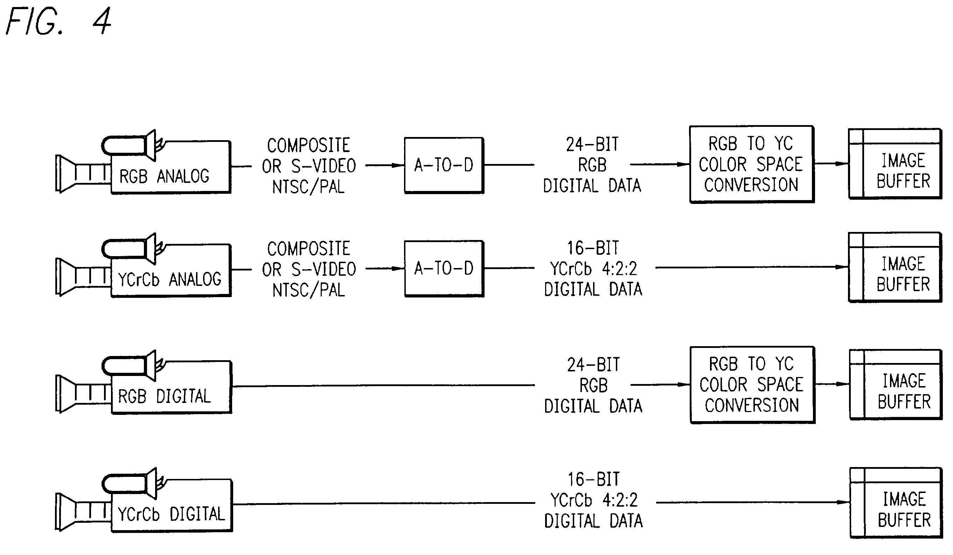

Fig. 4 is a schematic diagram illustrating the process of image acquisition for the method of the present invention for compressing color image data;
Fig. 5 is a schematic diagram of an overview of the method of the present invention for compressing color image data for storage or transmission;
Figs. 6 to 10 illustrate color image data preprocessing filter protocols according to the method of the present invention for compressing color image data;
Figs. 11A to 11D show a flow chart for the color image data preprocessing according to the method ofthe present invention for compressing color image data;
Fig. 11E is a flow chart ofthe options for setting the chromakey color and range according to the method of the present invention for compressing color image data;
Fig. 11F is a diagram illustrating the automatic chromakey process according to the method of the present invention for compressing color image data;
Figs. 12A to 12C show a flow chart for multilevel encoding of color image data according to the method of the present invention for compressing color image data;
Fig. 13 is a flow chart illustrating the steps of encoding a bitstream according to the method of the present invention for compressing color image data;
Figs. 14A to 14E show a flow chart for codebook compression according to the method of the present invention for compressing color image data;
Figs. 15A to 15D show a flow chart for encoding pattern maps according to the method of the present invention for compressing color image data;
Fig. 16 shows a flow chart for encoding luminance or chrominance values by codebook lookup according to the method of the present invention for compressing color image data;
Fig. 17 is a flow chart of adaptive compression;
Fig. 18 is an illustration of the format of the data stream;
Figs. 19A, B, C and D are tables of inputs and corresponding edge filters; and
Fig. 20 is a flowchart illustrating post-processing spatial filtering.

DETAILED DESCRIPTION OF THE PREFERRED EMBODIMENTS

While BTC statistical encoding can be used to reduce the number of bits required to digitally encode image data, the BTC method is limited to simple encoding of grayscale images. Digital color image compression methods typically use floating point arithmetic or 16-bit integer arithmetic, which are quite wasteful of computing power, particularly for encoding of color image data for smart cards and databases using microcontrollers. Noise can also seriously interfere with the efficiency of the image compression process, and although preprocessing filters can be used to remove noise, too much filtering can make the decompressed image cartoon-like, while too little filtering may not be sufficient to improve compression performance.

As is illustrated in the drawings, which are presented for purposes of illustration and are not intended to limit the scope of the invention, the present invention accordingly provides for a method for digital compression of color images such as color photographs for storage or transmission of the color images, although the method of the invention is equally applicable to gray scale images. Digital color image data typically from a video camera or an existing digitized photograph are first converted from the RGB (Red-Green-Blue) color space to the YCrCb (Luminance-Chrominance) color space. Preferably, the step of converting digital color image data to the YCrCb color space comprises utilizing lookup tables of selected color values for color space conversion, and in one preferred approach, the step of converting digital color image data to the YCrCb color space comprises utilizing nine 256-entry one-byte lookup tables containing the contribution that each R, G and B make towards the Y, Cr and Cb components.

At (or prior to) compile time, nine 256-entry one-byte lookup tables of selected color values are prepared containing the contribution that each R, G and B make towards the Y, Cr and Cb components, for i = 0..255, as follows:

$$1) \quad RY[i] = 224 \times 0.299 \times i / 255 \approx 0.263 \times i$$

$$2) \quad GY[i] = 224 \times 0.587 \times i / 255 \approx 0.516 \times i$$

$$3) \quad BY[i] = 224 \times 0.114 \times i / 255 \approx 0.100 \times i$$

$$4) \quad RCr[i] = 225 \times 0.713 \times 0.701 \times i / 255 \approx 0.441 \times i$$

$$5) \quad GCr[i] = 225 \times 0.713 \times -0.587 \times i / 255 \approx -0.369 \times i$$

$$6) \quad BCr[i] = 225 \times 0.713 \times -0.114 \times i / 255 \approx 0.072 \times i$$

$$7) \quad RCb[i] = 225 \times 0.564 \times -0.299 \times i / 255 \approx -0.149 \times i$$

$$8) \quad GCb[i] = 225 \times 0.564 \times -0.587 \times i / 255 \approx -0.292 \times i$$

$$9) \quad BCb[i] = 225 \times 0.564 \times 0.886 \times i / 255 \approx 0.441 \times i$$

Once completed, the table can be used to convert a pixel from RGB to YCrCb as follows:

$$Y = RY[r] + GY[g] + BY[b] + 16$$

$$Cr = RCr[r] + GCr[g] + BCr[b]$$

$$Cb = RCb[r] + GCb[g] + BCb[b]$$

This method requires 8304 bytes of constant ROM, six 8-bit additions and nine table lookups. The nine table lookups might require a 16-bit addition each, but more likely, the microcontroller could handle the lookup through an opcode or built-in addressing mechanism.

In addition to conventional convolution filters, the invention includes a unique preprocessing filter with three goals: 1) reducing noise without removing important face features, 2) sharpen blurred edges, and 3) not to be computationally complex. The preprocessing filter utilizes a five pixel window on a single scan line to determine the output value for the center pixel. For each target pixel, a sequence of five pixels, including 2 pixels on either side of the target pixel and the target pixel itself, are evaluated. Five cases are accounted for in the following discussion, which is directed only to the component of luminance, for simplicity. All three components (YCrCb) are included in the actual filters.

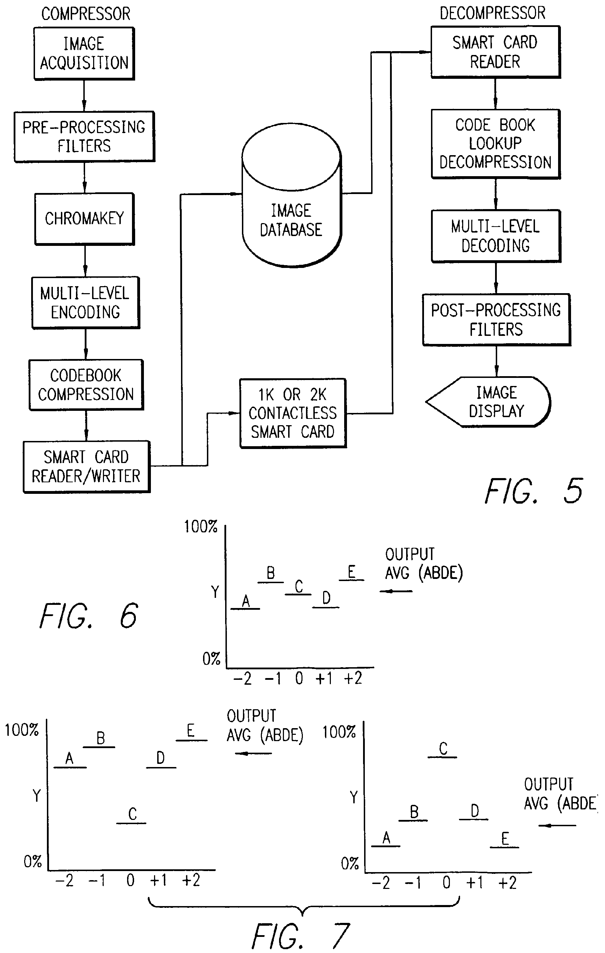

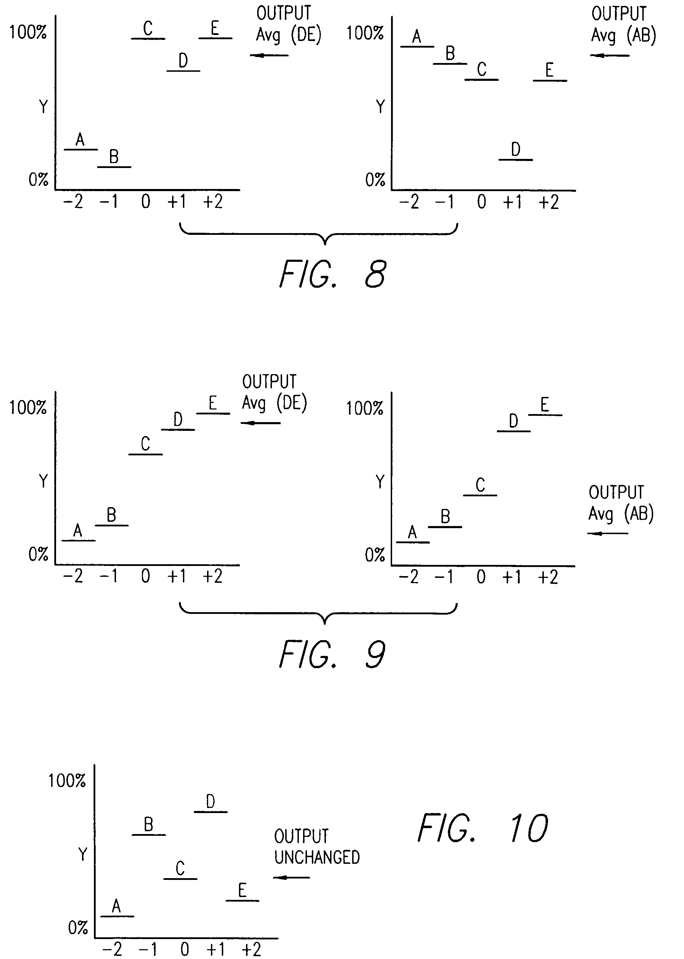

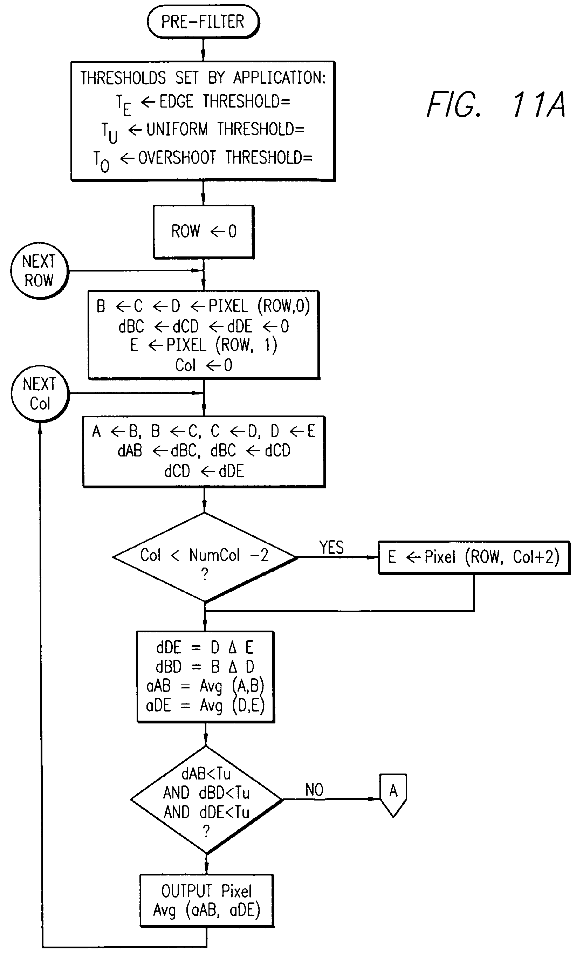

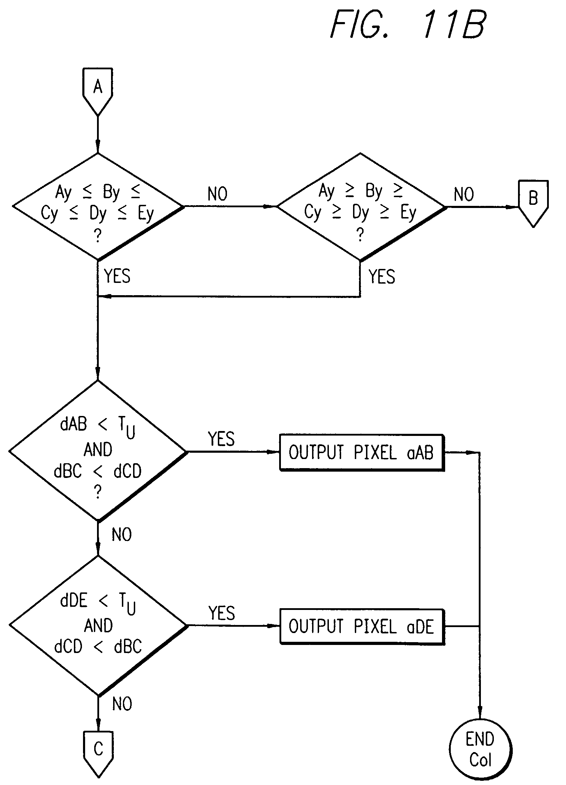

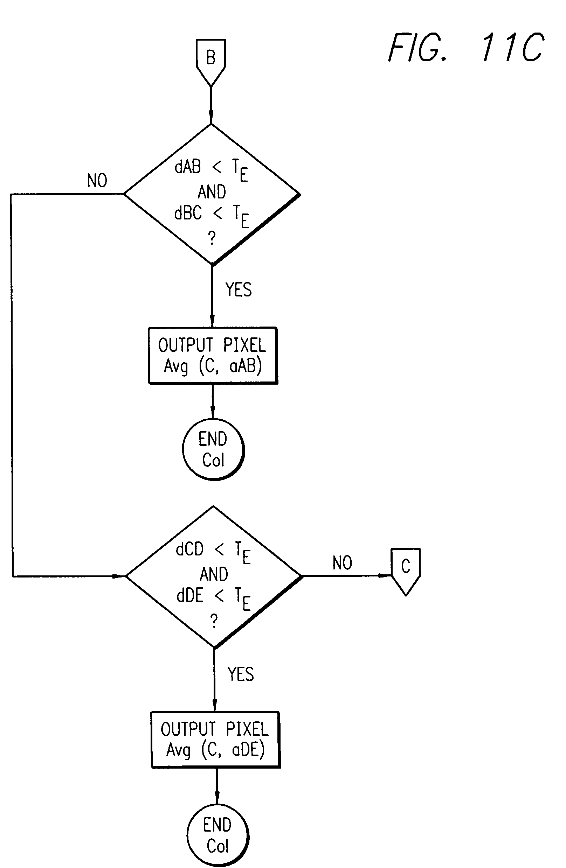

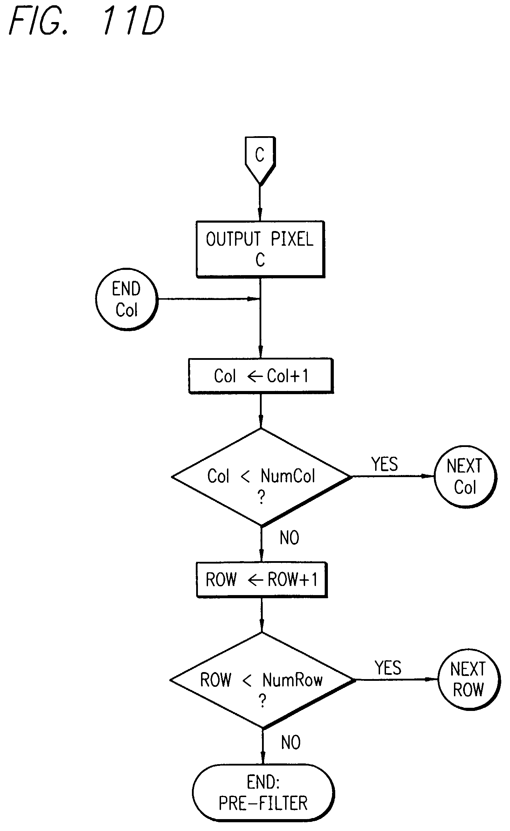

Referring to Fig. 6, in order to filter data for an individual target pixel, an average of the data for the pixels immediately surrounding the target pixel is taken, for those pixels surrounding the target pixel that are within a specified range of values. If all five pixels are within specified limits, the output is the average of four pixels in a raster line (A, B,D,E), two on each side of the target (C). If the two pixels on either side are within a specified range and both sides themselves are within the range, the target pixel is treated as impulse noise. As is illustrated in Fig. 7, the filtered output target pixel data is the average of the four pixels (A,B,D,E) on each side of the target pixel (C). Referring to Fig. 8, if the two pixels on either side of the target pixel and the target pixel itself are within a specified range, the target pixel (C) is considered to be an edge pixel. The output target pixel (C) is the average of the two pixels (A,B or D,E) on the matching side. If the five pixels are all increasing or decreasing (or are within a small range to account for ringing or pre-emphasis typically found in analog video signals), the target pixel is considered to be in the midst of a blurred edge. As is shown in Fig. 9, the output target pixel is then the average of two pixels (A,B) on whichever side is closest in value to the target pixel. As is illustrated in Fig. 10, if the five pixels in the window do not fit into any of the prior cases, the target is treated as being in the midst of a busy area, and the output target pixel is unchanged. The flow chart of Figs. 11A to 11D illustrate the color image data preprocessing according to the method of the present invention.

Background in the image being compressed can be replaced with a scalar value, in order to reduce noise in the image, and to increase the visual quality of the compressed image. In a currently preferred embodiment, the step of replacing background in the image being compressed with a scalar value can also involve setting an initial chromakey value and delta values.

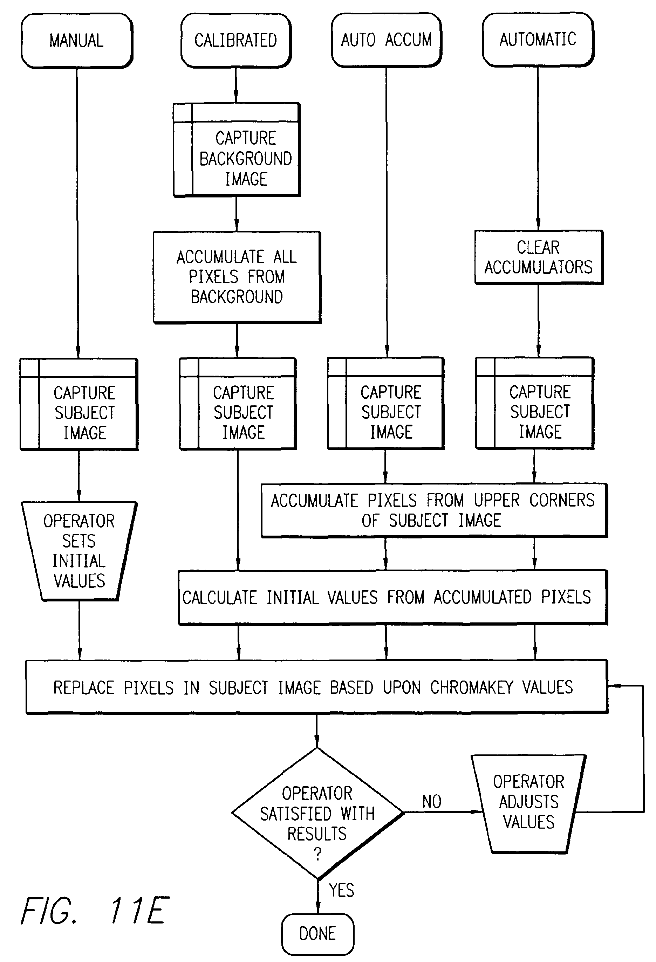

Methods illustrated in the flow chart of Fig. 11E are used to set the initial chromakey value and range: calibrated image, automatic, automatic-accumulated, and manual. In the chromakey calibrated image process, prior to capturing an image with the subject of interest in place, one or more calibration images of the background consisting substantially entirely of background pixels are captured. The average and standard deviation of those entire images are determined, and are used to set at least an initial chromakey value and range.

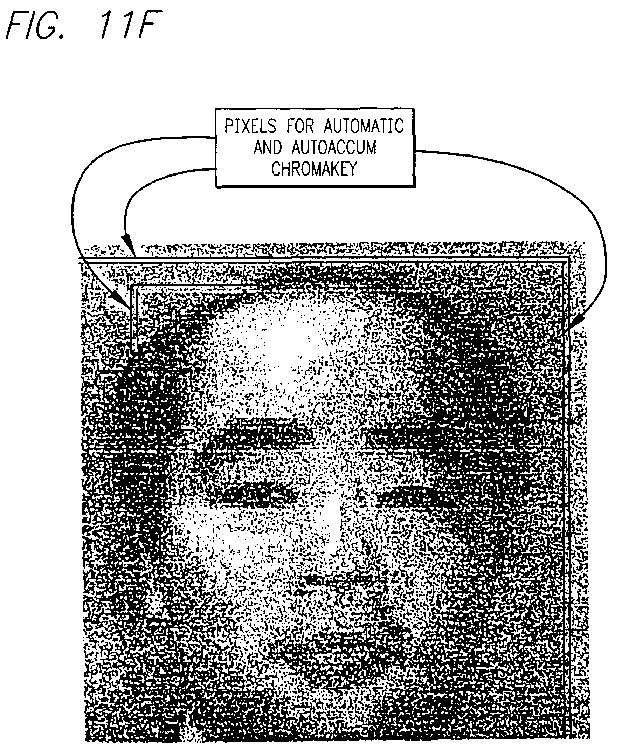

In the automatic chromakey calibration process of the invention, illustrated in Fig. 11F, an image is captured with the subject in place. Starting in the upper-left and upper-right corners of an image, pixels are collected down and towards the center until an edge or image boundary is encountered. The average and standard deviation of those pixels are calculated and used to set the initial chromakey value and range. In the automatic-accumulated chromakey process, the selection of pixels is carried out as in the automatic chromakey process, but the background pixel data are collected across several images. The average and standard deviation of those collected pixels are determined and used to set at least the initial chromakey value and range. For manual calibration the initial chromakey value and range are specified without respect to the properties of an individual image being captured prior to image capture.

In the calibrated image, automatic, and automatic-accumulated chromakey options, each pixel used for accumulating calibration data is converted to the YCrCb color space. For each pixel, the Y, Cr, and Cb values and their squares are accumulated along with a count of the pixels accumulated.

The average pixel value is calculated by dividing the accumulated Y, Cr, and Cb values by the number of pixels accumulated. This average is used as the chromakey value. From the Y, Cr, and Cb values and their squares, the standard deviation of the accumulated pixels can be calculated. Separate coefficients, for Y and C can be specified that are multiplied by the standard deviation to become chromakey delta values specifying the variance from the chromakey values to determine the ranges for each of the Y, Cr, and Cb components.

For calculated chromakey values that have very high or very low luminance values, or have small chrominance values, the chromakey values and delta values or variances from the chromakey values used to determine the ranges can be "normalized" by removing the chrominance component of the chromakey value and increasing the chrominance components of the chromakey delta values. In other cases, the chromakey value can be adjusted so that the value plus or minus the delta values for each component does not cross zero.

Preferably, a mask of colors closely matching the chromakey value is created. Three delta components are preferably used to describe a rectangular region in YCrCb color space. The three delta components can in an alternate preferred embodiment describe a hollow cylindrical segment in HSV color space. For each pixel, the differences between the Y, Cr, and Cb values of the pixels are compared with the Y, Cr, and Cb of the components of the chromakey values. If all three of the differences are within the Y, Cr, and Cb chromakey delta values, then a bit in the mask is set. In another preferred aspect, one delta component describes a spherical region in YCrCb color space.

Additionally, the method of the invention can further comprise the step of removing artifacts from the initial chromakey mask. The initial chromakey mask typically contains three types of artifacts that must also be removed. The term "chromakey mask" is used herein to mean the array of on/off bits that indicate whether a pixel is to be replaced in the chromakey process. The first type of artifact arises from small areas of pixels in the background that are not included in the chromakey mask set of pixels replacing background pixels, but should be included in the mask set. The second type of artifact arises from small areas of pixels that are included in the chromakey mask set, but that are actually part of the subject. The third type of artifact arises from those pixels creating a halo effect around the subject where the background and subject tend to blended for a few pixels around the boundary of the subject.

A few passes of erosion and dilation are typically used to adjust the chromakey mask. Erosion is the process of removing pixels from the mask that have few neighbors included in the mask, such as those pixels having less than a predetermined threshold number of adjacent pixels a given distance away; it is used to correct the second type of artifact. Dilation is the process of adding pixels to the mask that have most of their neighboring pixels included in the mask, such as those pixels having more than a predetermined threshold number of adjacent pixels a given distance away included in the mask; it is used to correct the first type of artifact. In one presently preferred embodiment, the step of removing artifacts comprises the steps of: a) initially determining the background mask set of pixels; b) removing pixels from the mask set that have less than a predetermined threshold of neighboring pixels included in the mask set; c) adding pixels to the mask set that have more than a predetermined threshold of neighboring pixels included in the mask set; and repeating steps b) and c) a plurality of times. The third type of artifact can be corrected by utilizing more dilation passes than erosion passes.

Another method has also been developed, operating on the same principles, to accomplish the same goals with much less computational power. According to this "chromakey cleanup" method, corrections are made first horizontally then vertically on the chromakey mask. In the chromakey cleanup process, the initial mask can be adjusted before pixel replacement actually begins. It may be repeated if necessary, and typically two passes are used. A sliding window of five pixels is used, and the center pixel is adjusted according to the following table, where "On" indicates the pixel is included in the chromakey mask, "Off" indicates the pixel is not included in the chromakey mask, and "X" indicates the pixel can be included or not included in the chromakey mask, or can be near an edge or not, for specific cases not covered in the table of rules:

| PIXEL POSITION | | | | | | |
|---|---|---|---|---|---|---|
| - 2 | -1 | 0 | +1 | +2 | Near Edge | New 0 |
| Off | Off | Off | On | On | No | On |
| On | On | Off | Off | Off | No | On |
| Off | Off | On | Off | Off | X | Off |
| X | On | Off | On | X | X | On |
| On | Off | Off | On | On | X | On |
| On | On | Off | Off | On | X | On |
| X | X | On | X | X | X | On |
| X | X | Off | X | X | X | Off |

Once these artifacts have been removed from the chromakey mask, a replacement color is substituted into the original image for each pixel that is "on" in the mask. The application developer has the option of using the chromakey value color as the replacement color or specifying a fixed replacement color. Further, the developer can use the replacement color as the background color for the first level encoding step or specifying another fixed value.

While the currently preferred method typically uses a cube-shaped region bounded by the chromakey value, plus and minus the chromakey delta for determining a range for each component, it should be recognized that the region may be replaced by a spherically-shaped region determined by a distance parameter from the chromakey value, or alternatively the chromakey calculations may be done in a HSV (Hue, Saturation, Value) color space which would result in a wedge-shaped region.

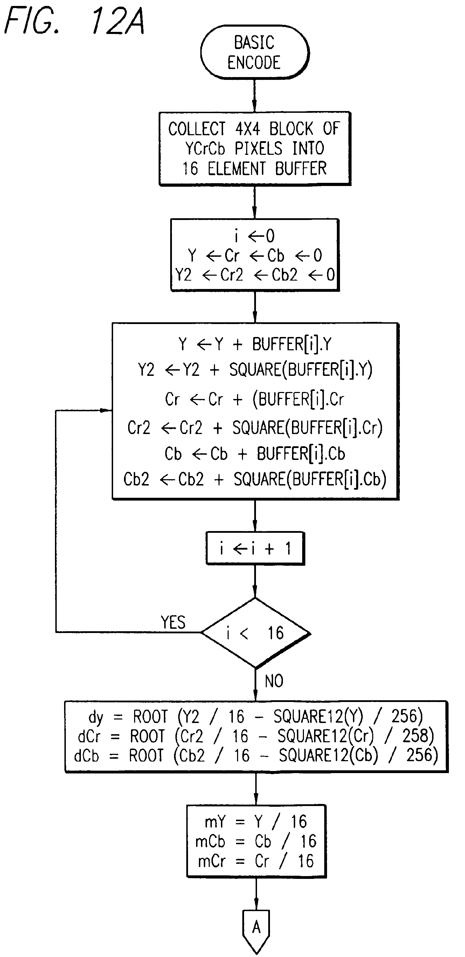

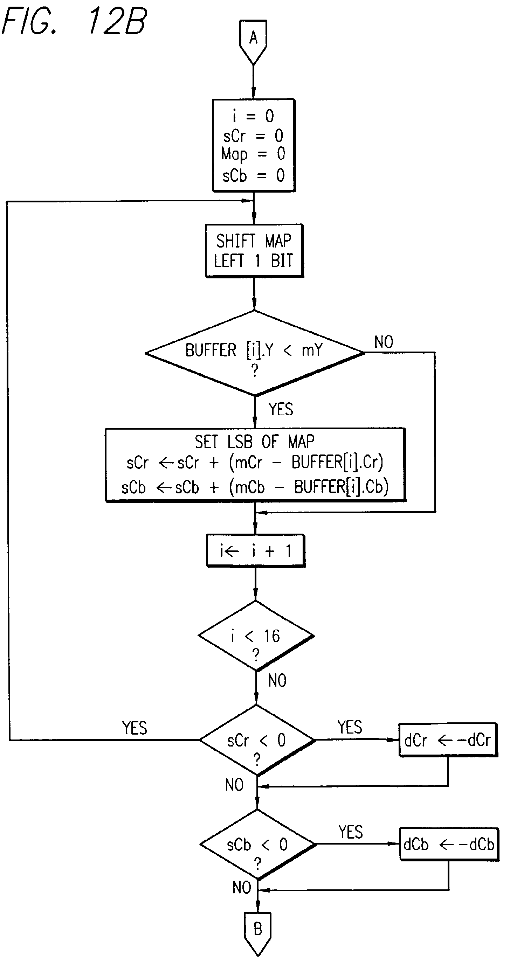

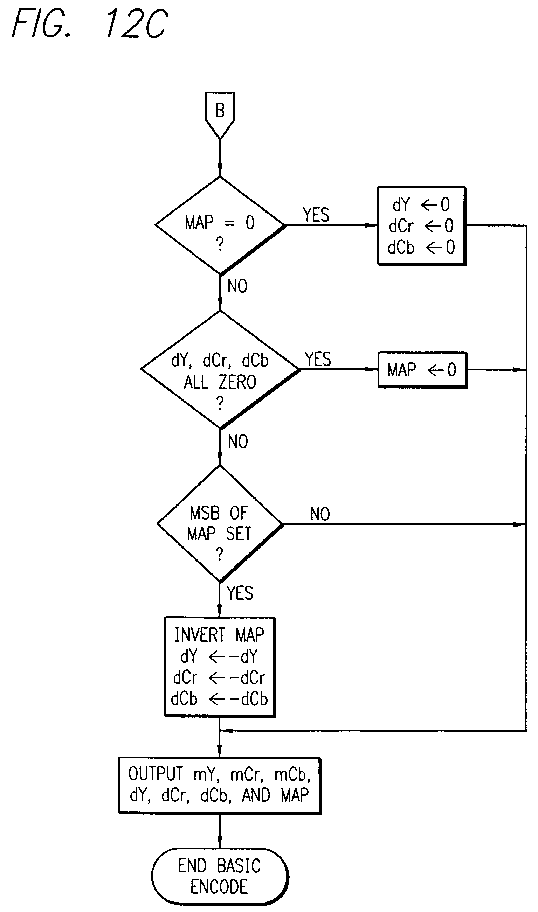

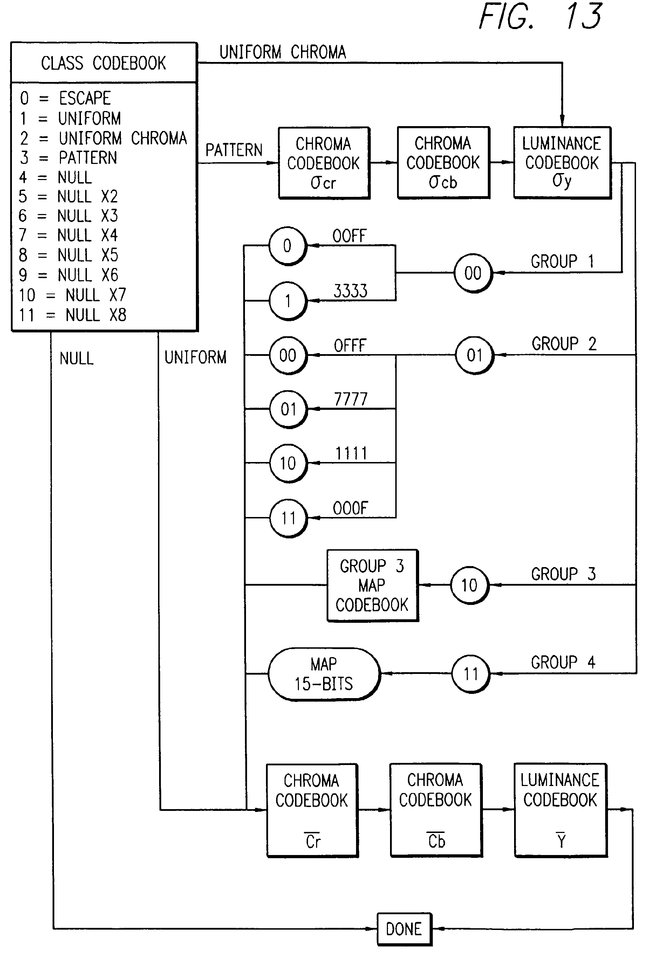

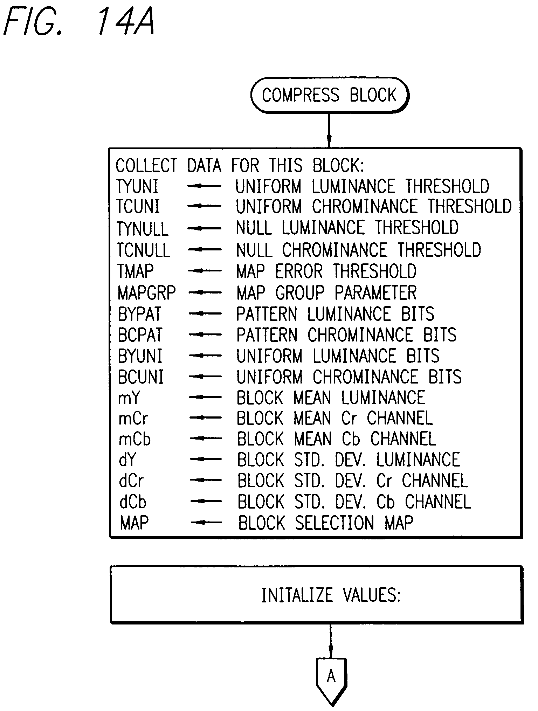

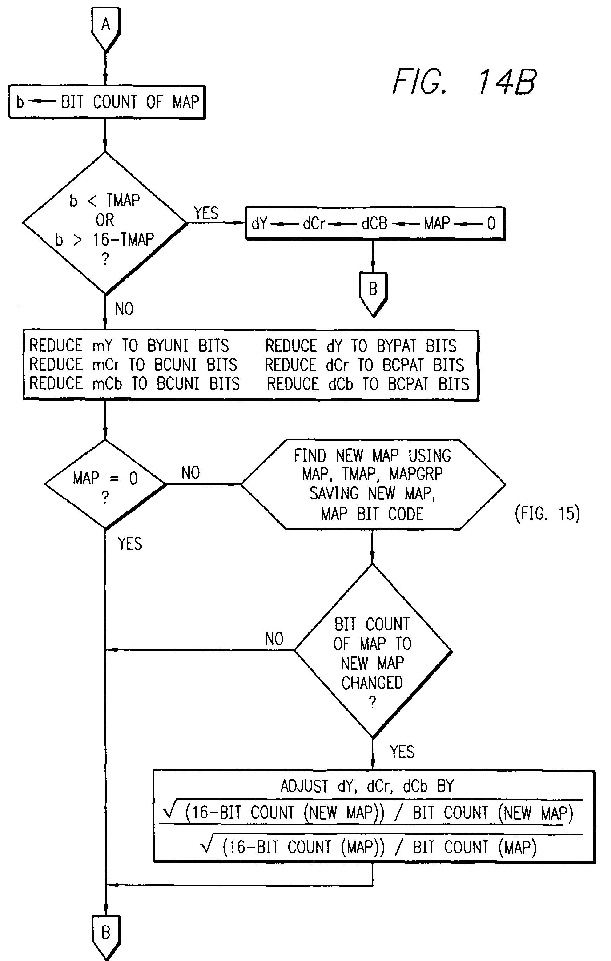

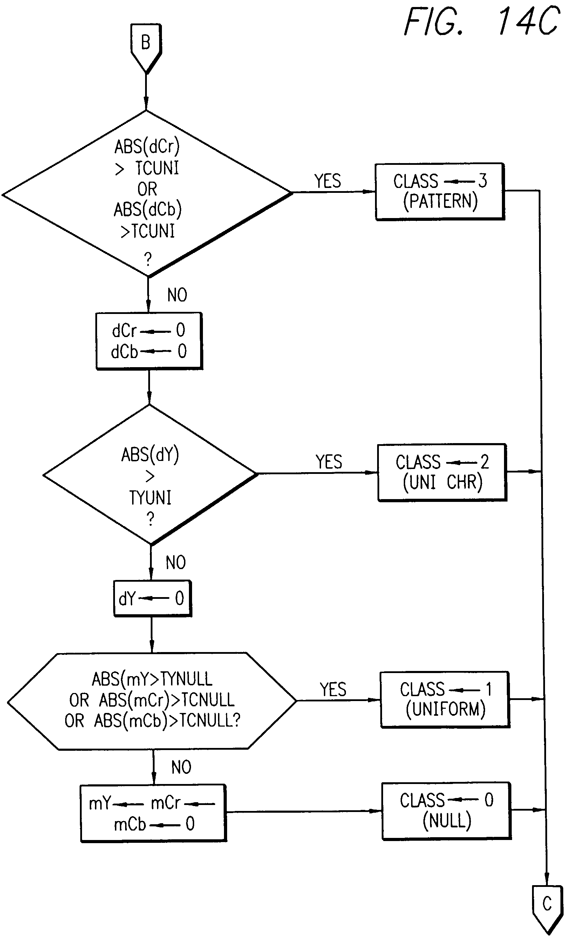

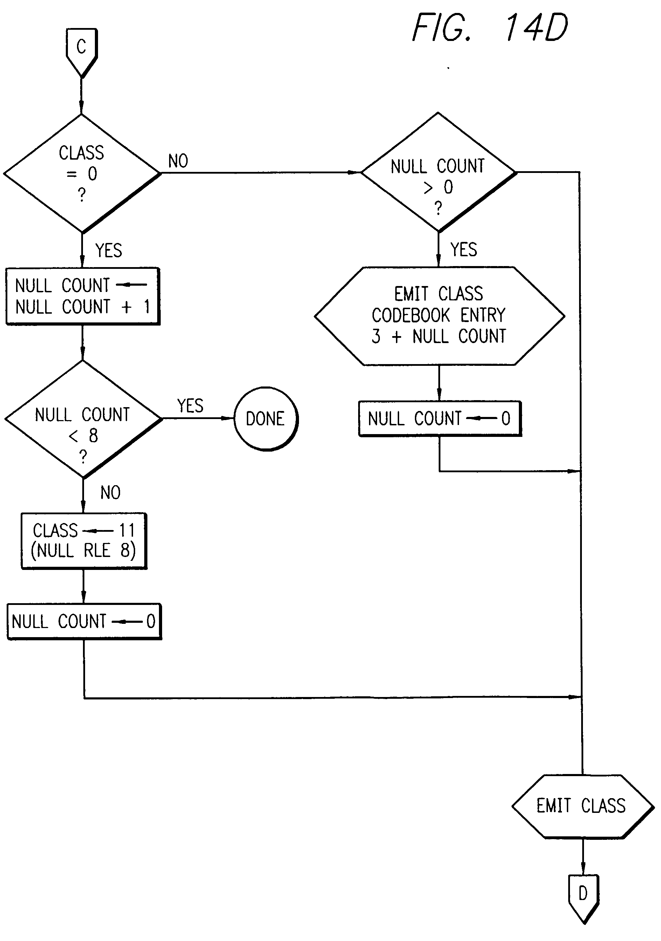

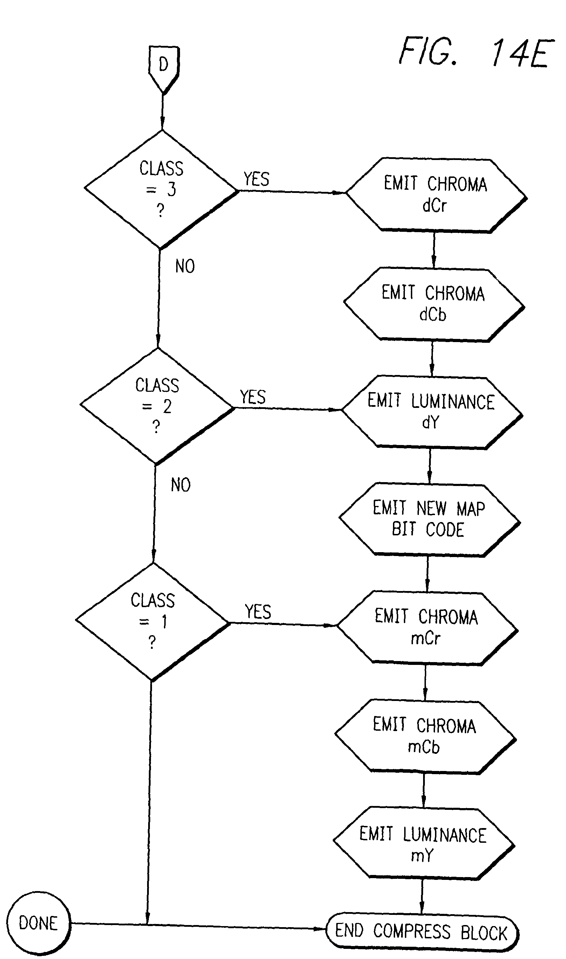

In the multilevel statistical encoding of a gray scale or a color image data according to the present invention, as illustrated in Figs. 12A to 12C, 13 and 14A to 14E, the first portion of the actual process of compression typically involves dividing the image into an array of 4x4 squares of pixels, and encoding each 4x4 square of pixels into a fixed bit length block containing a central color value, color dispersion value, and a selection map that represent the sixteen pixels in the block. Then 4 x 4 blocks of representative values from the level-one are encoded into higher level, or level-two blocks of central color values. Each level two block describes a lower resolution 16 x 16 pixel image. The process continues to 64 x 64, 256 x 256, and even 1024 x 1024 pixel blocks. The number of levels are selected so that four to fifteen top level blocks in each dimension remain. The compression system of the invention uses only two levels. In a presently preferred aspect of the method of the invention, the step of statistically encoding the image data comprises dividing the image into an array of 4x4 squares of pixels, and multi-level encoding the central color values of each 4x4 square of lower level blocks. In one currently preferred option, the step of multi-level encoding is repeated until from four to fifteen blocks remain on each axis of a top level of blocks. In a preferred variation of this option, the top level of blocks is reduced to residuals from a fixed background color. In an alternate preferred option, each successive lower level block is reduced to the residuals from the encoded block on the level above. In another alternate preferred option, the pixel values are reduced to the residuals from the encoded level one blocks.

In the modified block truncation coding (BTC) algorithm the image is divided into 4x4 blocks of pixels, and the first sample moment (the arithmetic mean) and the second sample moment are determined. In one currently preferred embodiment, each block contains a central color value and a color dispersion value, and the step of statistically encoding the image data comprises determining a first sample moment of each block as the arithmetic mean of the pixels in the block, and the central color value of each block is set to the arithmetic mean from the first sample moment of the pixels in the block. One presently preferred option of this embodiment involves determining a second sample moment of the pixels in the block, and determining the color dispersion value of each the block by determining the standard deviation from the first and second sample moments. In another presently preferred alternate embodiment, instead of a second standard sample moment, a first absolute central moment can be determined, to quantify the dispersion around the central value, and the color dispersion value is set to the first absolute moment. Another presently preferred option of this embodiment involves determining a first absolute moment by determining an average of the difference between the pixel values and the first sample moment, and wherein the color dispersion value is set to the first absolute moment. A selection map of those pixels having color values less than or greater than a discriminator set to the first sample moment is determined, along with a count of the lighter pixels.

In another presently preferred aspect of the method of the invention, the step of statistically encoding the image data comprises determining a first sample moment of each block as the arithmetic mean of the pixels in the block, determining a second sample moment of the pixels in the block, and determining the selection map from those pixels in the block having values lighter or darker than the average of the lightest and darkest pixels in the block. The sample variance and the standard deviation can thus be determined based upon the first and second sample moments. The mean, standard deviation, and selection map are preserved for each block. As adapted for YCrCb color, according to the method of the present invention, the first sample moment for each color component is thus determined according to the following equations:

$$\overline{Y} = \frac{1}{16} \sum_{i=1}^{16} Y_i$$

$$\overline{Cr} = \frac{1}{16} \sum_{i=1}^{16} Cr_i$$

$$\overline{Cb} = \frac{1}{16} \sum_{i=1}^{16} Cb_i$$

The second sample moment is determined according to the following equations:

$$\overline{Y^2} = \frac{1}{16} \sum_{i=1}^{16} (Y_i)^2$$

$$\overline{Cr^2} = \frac{1}{16} \sum_{i=1}^{16} (Cr_i)^2$$

$$\overline{Cb^2} = \frac{1}{16} \sum_{i=1}^{16} (Cb_i)^2$$

The standard deviation is determined according to the following equations:

$$\sigma_Y = \sqrt{\overline{Y^2} - (\overline{Y})^2}$$

$$\sigma_{Cr} = \sqrt{\overline{Cr^2} - (\overline{Cr})^2}$$

$$\sigma_{Cb} = \sqrt{\overline{Cb^2} - (\overline{Cb})^2}$$

The selection map $m_i$ for each block is determined as is illustrated in Figs. 12A to 12C, where:

$$m_i = Y_i < \overline{Y}, i = 1...16$$

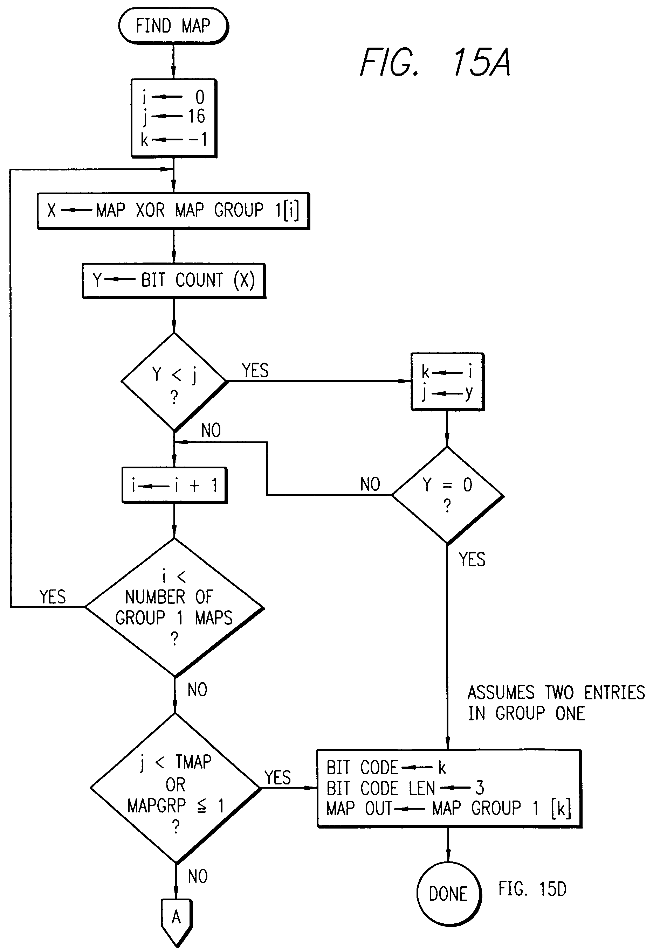

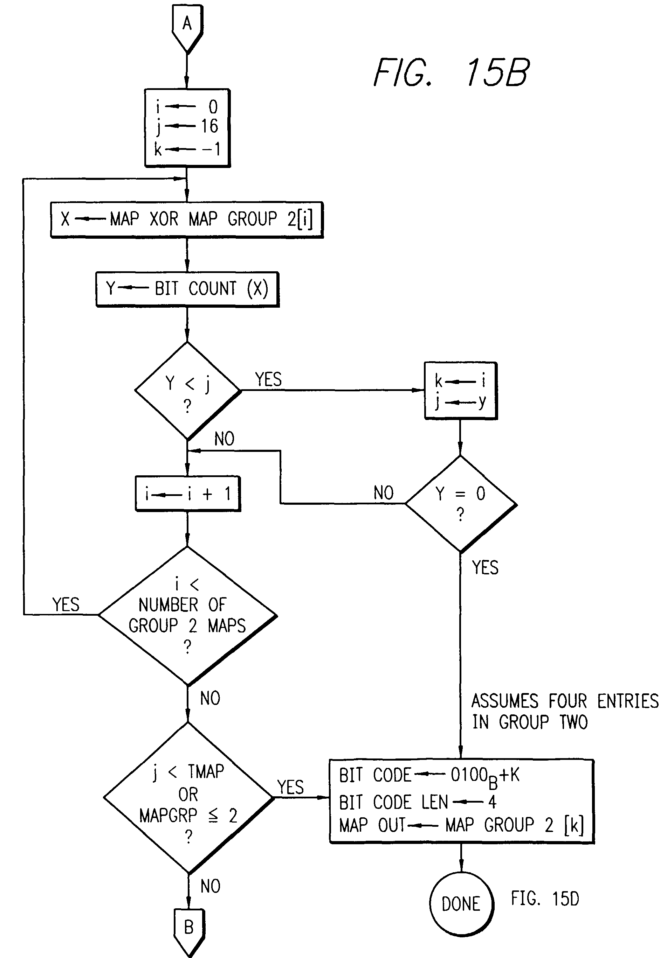

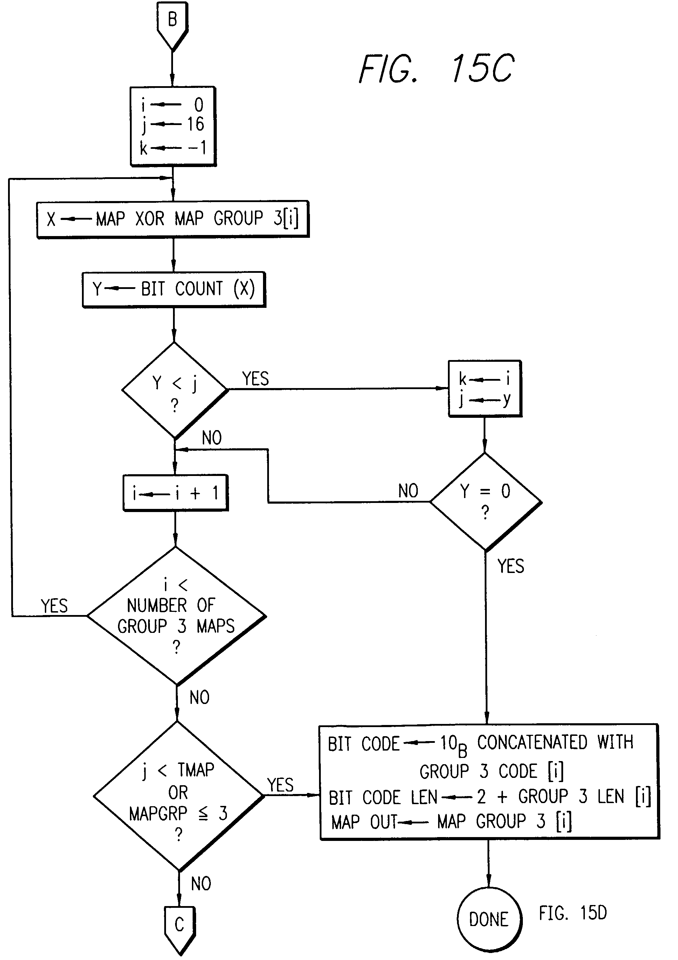

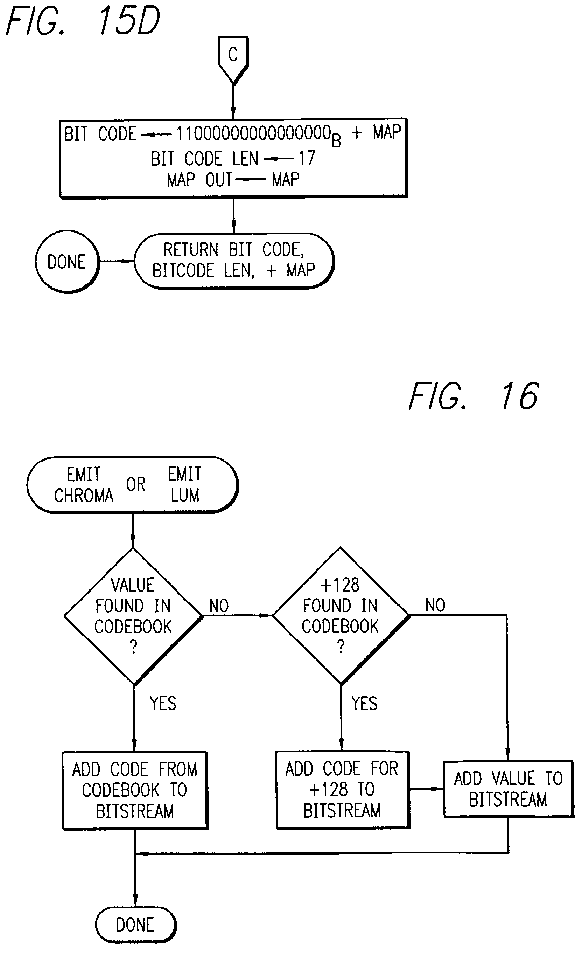

Referring to Fig. 12A, each 4x4 block of pixels is collected into a 16 element buffer, in which the index ranges from 0 to 15. In the first step, the first and second moments are determined. Squares are preferably determined by table lookup using an 8-bit table of squares rather than by multiplication. In the second step, the mean and standard deviation are determined, using a square 12 function to determine the square of a 12-bit number based upon the same 8-bit table of squares above. The root function finds roots by binary search of the same 8-bit table of squares. In Fig. 15A, dY, dCr and dCb are the standard deviations for each component, and mY (mean luminance), mCr, and mCb are the arithmetic means. In the third step, illustrated in Fig. 15B, the selector map is determined from the mean luminance value mY for the selector. The one bits in the map mark those pixels that are "darker" than the mean. The signed differences are accumulated from the mean in each chrominance (Cr/Cb) channel. If the Cr channel decreases when the luminance increases, dCr is inverted. If the Cb channel decreases when the luminance increases, dCb is inverted. In the fourth step, illustrated in Fig. 15C, values are normalized. If the luminance of all pixels is equal to or slightly greater than the mean, all standard deviation values are zeroed. If all of the pixels are nearly equal, the standard deviations will all be zero, in which case the map is also zeroed. To reduce the number of possible maps from 65,536 to 32,768, if the MSB (most significant bit) map is set, the map is inverted and the dY, dCr, and dCb values are negated.

The second half of the compression process involves taking the fixed bit (8 and 16 bit) length blocks encoded by the previous multilevel encoding step, and compressing them using minimum redundancy, variable-length bit codes.

The basic process for compressing a single encoded block comprises three steps: classification, quantization, and codebook compression. Before beginning the compression steps, however, the parameters used for the particular block must be established. Several parameters are used to control the compression process. The parameters specify tolerances for how blocks are classified, how many bits of which component in the encoded block will be preserved, and how precisely the selection map is preserved. Different quality parameters may be used for different levels. For adaptive compression, each region of the image will use a different parameter set.

Adaptive compression is the process of making certain areas of the image that are considered to be more important look better, and is accomplished in two basic parts. In the first part, the level two (L2) blocks of the image are divided into groups and a portion of the total compressed data is allocated to each group. In the second part, the compression thresholds are adjusted for each group to ensure that the image is compressed within the allocated space.

For facial identification images, the image is typically divided into three or four groups. The groups are generally layed out in concentric circles with the highest priority area in the center. Targets for the amount of compressed data used for encoding each of the groups are also determined. Usually the highest priority group has two to three times the bits per pixel as the least priority group.

The following example is ofa 96x96-pixel image divided into four groups with an overall maximum of 1600 bytes of compressed data.

| Group | Level Two Blocks | Target Group Bytes | Bytes per L2 Block | Bits per Pixel |
|-------|------------------|--------------------|--------------------|----------------|
| A | 4 | 400 | 100 | 3.13 |
| B | 8 | 400 | 50 | 1.56 |
| C | 12 | 400 | 33.33 | 1.04 |
| D | 12 | 400 | <33.33 | <1.04 |
| Total | 36 | 1600 | 44.44 | 1.39 |

To adapt to different capture environments and differently shaped faces, three layouts are defined, "circle," "oval," and "belt." For facial identification images, the comers of the image typically carry the least amount of information. The application can also choose the most appropriate of the three group layouts and whether to truncate the corners.

If truncation is selected, one block is removed from each corner on sides with seven or less blocks and two blocks are removed from the corner on sides with more than seven blocks. Truncation is bypassed on images having less than four blocks on either side.

To determine which blocks are considered to be within each group, first the sum of the distance between the center of each block and a set of control points is calculated. For the circle layout, only one control point is used in the center of the image. For the oval layout, three control points are used: one in the center of the image and one each one-fourth of the image height above and below the center. For the bell layout the three control points are (1) centered horizontally and one third down, (2) one-third from the left and one-third up, and (3) one-third from the right and one-third up. The calculated distances are then sorted.

For images with less than 25 blocks, only three groups are used. Blocks associated with the first one-sixth of the distances are included in the first group. The remainder of the first half of the distances are included in the second group. The remaining blocks are included in the third group. For each group, all blocks having a distance equal to the target (one-sixth or one-half) are included in the target group. In general, one-fourth of the maximum compressed bytes are allocated to the first group, one-fourth to the second group, and the remaining one-half to the third group. These allocations are adjusted for the number of blocks that are actually included in the group.

With more than 25 blocks, four groups are used. The distances are divided into ninths. Blocks associated with the first ninth are included in the first group. Blocks associated with the second and third ninth are assigned to the second group. Blocks associated with the fourth and fifth ninth are assigned to the third group. All remaining blocks are included in the fourth group. Again, all blocks having a distance equal to the target are included in the earlier group. In general, one-fourth of the maximum compressed bytes are allocated to each group. These allocations are also adjusted for the number of blocks assigned to the groups.

In order to achieve the highest possible quality within the maximum compressed bytes constraint, an iterative process is used. Several sets of compression thresholds are defined, called quality levels. At the highest quality level, the thresholds are set to very low values. As the quality level decreases, the threshold values are gradually increased. The actual values for the thresholds are chosen so that as the quality level decreases, fewer bytes of compressed data are produced when they are applied to a typical facial identification image. A sample set of quality level values is shown in the table:

| Quality Level | TYU | TCU | TYN | TCN | Map Error | Map Group |
| --- | --- | --- | --- | --- | --- | --- |
| 9 | 0 | 0 | 0 | 0 | 0 | 4 |
| 8 | 0 | 0 | 1 | 1 | 1 | 4 |
| 7 | 1 | 1 | 1 | 1 | 1 | 4 |
| 6 | 1 | 1 | 2 | 2 | 1 | 4 |
| 5 | 2 | 2 | 2 | 2 | 1 | 4 |
| 4 | 2 | 2 | 3 | 3 | 2 | 3 |
| 3 | 3 | 3 | 3 | 3 | 2 | 3 |
| 2 | 3 | 3 | 3 | 3 | 3 | 3 |
| 1 | 3 | 3 | 4 | 4 | 4 | 2 |
| 0 | 4 | 4 | 4 | 4 | 4 | 2 |

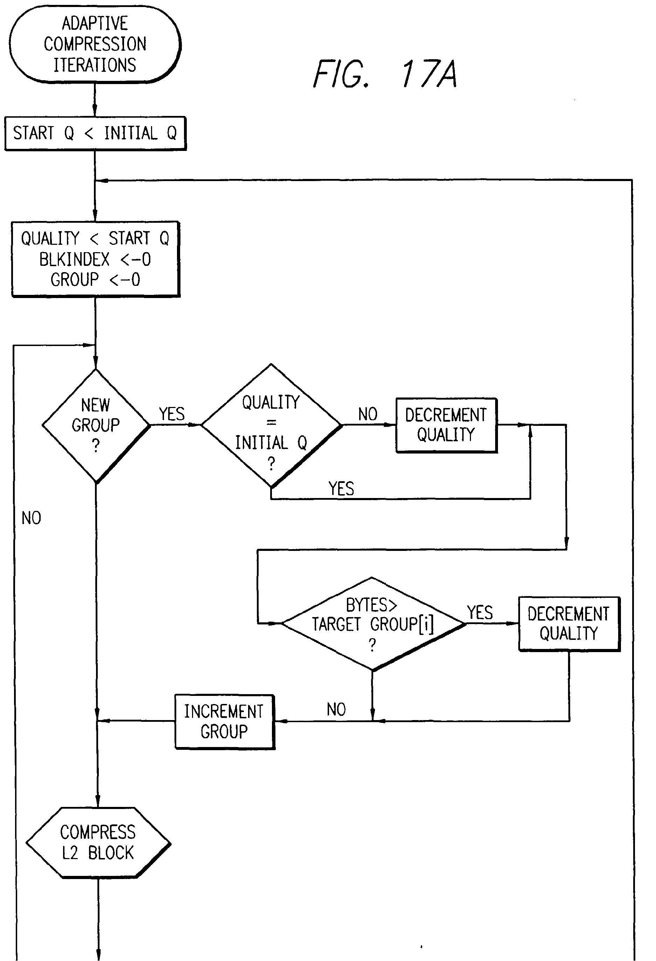

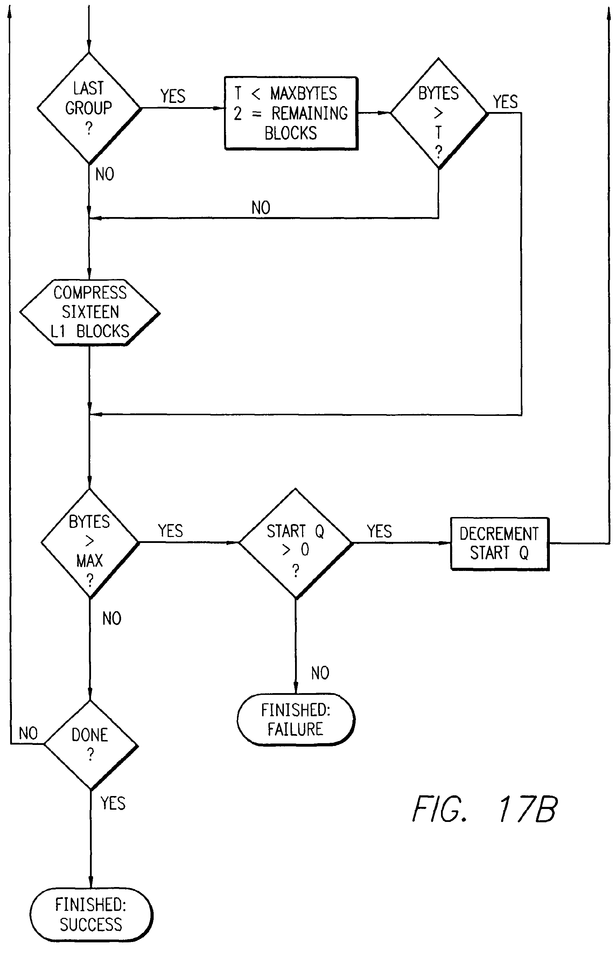

During the compression process, the quality level is automatically decreased after processing each group of blocks, except when at the highest quality level. If at the end of a block group, the number of accumulated bytes of compressed data exceeds the target for that group (either as calculated above or specified by the application), the quality level is decreased a second step. In addition, when processing the last group, each block is checked against the remaining allocation. If a block is beyond the target, only the level two data is preserved. If the maximum bytes allowed is exceeded, the process is repeated starting one quality level lower. The flowchart in Fig. 17 illustrates this process.

The basic codebook compression process consists of three steps: First, blocks are classified into four categories - null, uniform, uniform chroma, and pattern. Second, the number of bits for the Y and Cr/Cb components may be reduced, differently for each classification. Third, for uniform chroma and pattern classified blocks the texture map is tested against three groups of simpler, more common "pattern maps." Where the pattern map is sufficiently similar to the texture map from the encoder, it is used. Otherwise the entire 16-bit texture map is kept, as is described further below.

Another aspect of the method of the invention currently preferably involves preparing a datastream for storage or transmission in level order. In an alternate preferred embodiment, the method of the invention involves preparing a datastream for storage or transmission in block order. Another currently preferred embodiment of the method of the invention further involves the step of adding compressed residuals between input pixel data and level-one decoded blocks to thereby provide loss-less digital compression of the image.

For multilevel decompression, blocks can be processed for storage or transmission of the datastream for decoding in either block order or level order. In block order, for each top level block, a top-level block is processed followed by the lower level blocks within the top level block. This method allows adaptive decompression or selective processing of top-level blocks. In level order processing, all of the blocks of the top level are processed first, then each intermediate level, followed by the lowest level processing. In a presently preferred aspect, the step of decompressing comprises restoring the components of the blocks to the original number of bits based upon block classification. This method allows for progressive decoding of still images where a very low resolution image can be displayed when the top level is decoded, and progressively higher resolution images can be displayed as each intermediate level is decoded, and finally the full resolution image can be displayed after decoding the level one data as will be further explained below. In one presently preferred embodiment, the step of decompressing each block comprises decompressing each block by codebook decompression.

In one presently preferred embodiment, the step of preparing a datastream for storage or transmission in block order comprises selecting a block order to first process those portions of the image that are most important to facial identification. In one preferred option, the block order provides a circle group layout. In another presently preferred option, the corners of the image are truncated. In one preferred aspect, the block order provides an oval group layout, and in a preferred option, the corners of the image are truncated. Alternatively, the block order can provide a bell group layout, and the corners of the image may also be truncated.

In another aspect of the invention, the step of preparing a datastream for storage or transmission in block order comprises dividing the blocks into groups. The blocks can, for example, be divided into groups by assigning a portion of the maximum compressed bytes to each group. In addition, the step of dividing the blocks into groups can also involve adjusting quality-controlling thresholds upon completion of each group. In a preferred aspect, only level two block information is transmitted on the last block to be processed if the information is near a maximum limit of compressed bytes. The compression of the image can also be repeated starting at a lower quality level if necessary to process the entire image into a maximum limit of compressed bytes.

The state data is defined as the minimum information that must be the same on the encoding system and the decoding system so that a compressed data bitstream can be successfully decoded. The state data consists of the following items: (1) base rows, (2) base columns, (3) quantizer for level one and level two, (4) codebook identifiers for each classification, luminance, chrominance, and group 3 maps, and (5) group layout identifier.

Typically, an individual application will have very specific needs and constraints. All that is required is that the state data parameters be set the same (or have the same default values) on both the encoder and decoder. However, for applications where any element of the state data might vary from image to image, the state data (or at least the variable items) must be kept with the compressed data. Otherwise, the compressed data would be unusable. In addition, in a given application it may be desirable to store preferences, such as a combination of post filters, with the compressed data.

A quantizer value defines the values used for the $b_{YU}$, $b_{YP}$, $b_{CU}$, and $b_{CP}$ bit count parameters, which are discussed further below. A sample table of values for the quantizer and the corresponding bit count parameters is shown here:

| Quantizer | $b_{YU}$ | $b_{YP}$ | $b_{CU}$ | $b_{CP}$ |
|-----------|----------|----------|----------|----------|
| 1 | 4 | 4 | 4 | 4 |
| 2 | 5 | 4 | 4 | 4 |
| 3 | 5 | 5 | 4 | 4 |
| 4 | 5 | 4 | 5 | 4 |
| 5 | 5 | 5 | 4 | 4 |
| 6 | 5 | 5 | 5 | 4 |
| 7 | 6 | 4 | 4 | 4 |

(continued)

| Quantizer | $b_{YU}$ | $b_{YP}$ | $b_{CU}$ | $b_{CP}$ |
|---|---|---|---|---|
| ... | | | | |
| 63 | 8 | 8 | 8 | 8 |

During the first part of the adaptive compression process, the level 2 blocks are sorted. The same sort order algorithm must be used in the decoder. Thus, for the same base rows, base columns, and group layout identifier (circle, oval, or bell; truncated or not), the encoder and decoder will process the level two blocks in the same order.

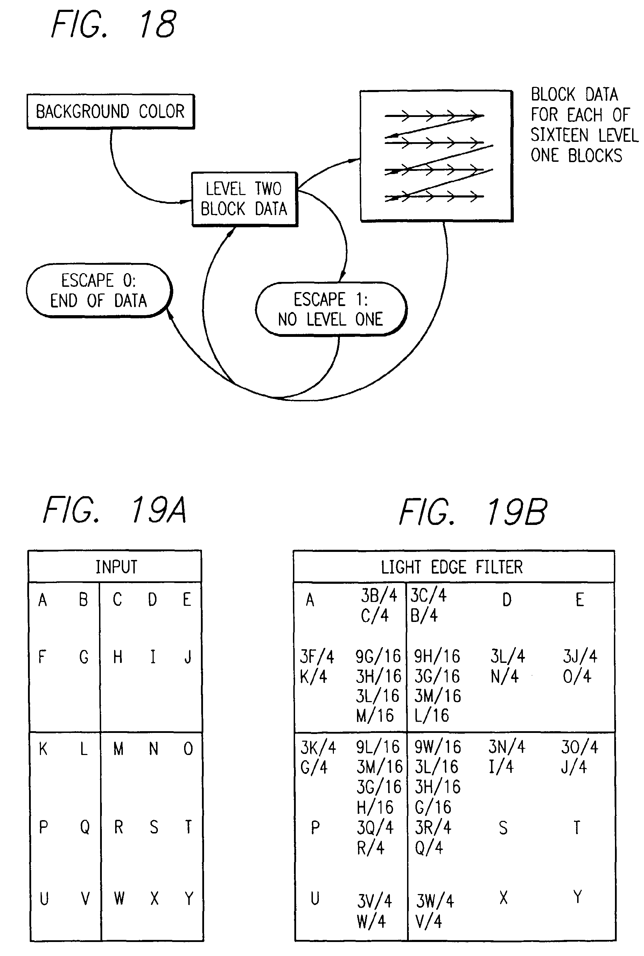

The compressed data for each level two block will usually be followed by its sixteen level one blocks. The level one blocks will be processed from the upper left comer across the top row, continuing from the left of the second row, and finishing in the lower right corner. Two escape codes are defined. The first signals the end of compressed data. The other is used when level one data is to be skipped. Figure 18 illustrates the format of the data stream.

Four codebooks are used in the basic compression process, one each for block classification, luminance difference, chrominance difference, and group three pattern maps, as is described further below. Different applications will have different distributions of values to be compressed.

The system of statistical encoding known as Huffman coding is used for constructing variable bit length codebooks based upon the frequency of occurrence of each symbol. For the ultimate use of this technique, a new set of codebooks would need to be constructed for each image and transmitted to the decoder. However, this process is usually not practical. The method of the present invention preferably includes several codebooks optimized for a variety of applications. Typically a single set of codebooks is used for an image, but if necessary, each set of parameters can specify different codebooks.

Once the block data and parameters have been collected, the block is classified as null, uniform, uniform chroma, or pattern. Null blocks exhibit little or no change from the higher level or previous frame. Run lengths of one to eight null blocks are collected, and no other information is preserved. Uniform blocks have a relatively low standard deviation, being less than a predetermined threshold, and are therefore relatively uniform in their change in color from the higher level or previous frame. The mean values for all three components are preserved.

Uniform chroma blocks have a significant luminance component to the standard deviation, but little chrominance deviation. The mean luminance and chrominance, standard deviation luminance, and a suitable selection map are preserved. Pattern blocks have significant data in both luminance and chrominance standard deviations. All components of the block are preserved. An additional classification, called an escape code, is also used to navigate the compressed bitstream.

After the block is classified as null, uniform, uniform chroma, or pattern, the number of bits to be preserved for each component of the block is set as follows:

| | $\bar{Y}$ | $\overline{Cr}$ | $\overline{Cb}$ | $\sigma_Y$ | $\sigma_{Cr}$ | $\sigma_{Cb}$ | MAP |
|---|---|---|---|---|---|---|---|
| Null | 0 | 0 | 0 | 0 | 0 | 0 | 0 |
| Uniform | $b_{YU}$ | $b_{CU}$ | $b_{CU}$ | 0 | 0 | 0 | 0 |
| Uniform Chroma | $b_{YU}$ | $b_{CU}$ | $b_{CU}$ | $b_{YP}$ | 0 | 0 | Yes |
| Pattern | $b_{YU}$ | $b_{CU}$ | $b_{CU}$ | $b_{YP}$ | $b_{CP}$ | $b_{CP}$ | Yes |

For uniform chroma and pattern blocks, the selection map is preserved along with the color data. The run length of null blocks are recorded without preserving components of the null blocks. Three groups of common selection maps are identified by the compression method of the invention. The first two groups are fixed while the application developer can select from several codebooks for the third group. If a suitable match cannot be found in the three groups, the entire texture map is preserved.

The following notation is used when identifying selection maps:

| 0 | $b_{14}$ | $b_{13}$ | $b_{12}$ |
|---|---|---|---|
| $b_{11}$ | $b_{10}$ | $b_9$ | $b_8$ |
| $b_7$ | $b_6$ | $b_5$ | $b_4$ |
| $b_3$ | $b_2$ | $b_1$ | $b_0$ |

For example

| 0 | 1 | 1 | 1 |
|---|---|---|---|
| 0 | 1 | 0 | 1 |
| 0 | 0 | 1 | 0 |
| 1 | 0 | 0 | 0 |

= 7528H in hexidecimal notation.

Since the selection map is normalized in the encoding step so that the MSB is zero, each map actually represents two.

| Group | Members | Implied Maps | Encoding |
|---|---|---|---|
| 1 | $00FF_H$ $3333_H$ | $FF00_H$ $CCCC_H$ | 3 bits |
| 2 | $0FFF_H$ $7777_H$ $1111_H$ $000F_H$ | $F000_H$ $8888_H$ $EEEE_H$ $FFF0_H$ | 4 bits |
| 3 | By Codebook | | typically 5 to 9 bits |
| 4 | Actual Texture Map | | 17 bits |

Since the decoded colors from a block depend upon the number of bits in the map, if a map that is substituted has a different number of bits, the standard deviation components of the block are adjusted. For each individual block, the bitstream is written as is illustrated in Figure 16.

The classification codebook contains twelve entries, eight run lengths of null blocks and one each for uniform, uniform chromas, and pattern blocks, plus an entry for preceding escape codes. Escape codes are dependent upon the implementation and can be used to signal the end of an image, end of a block run, skipping to a different block, and the like.

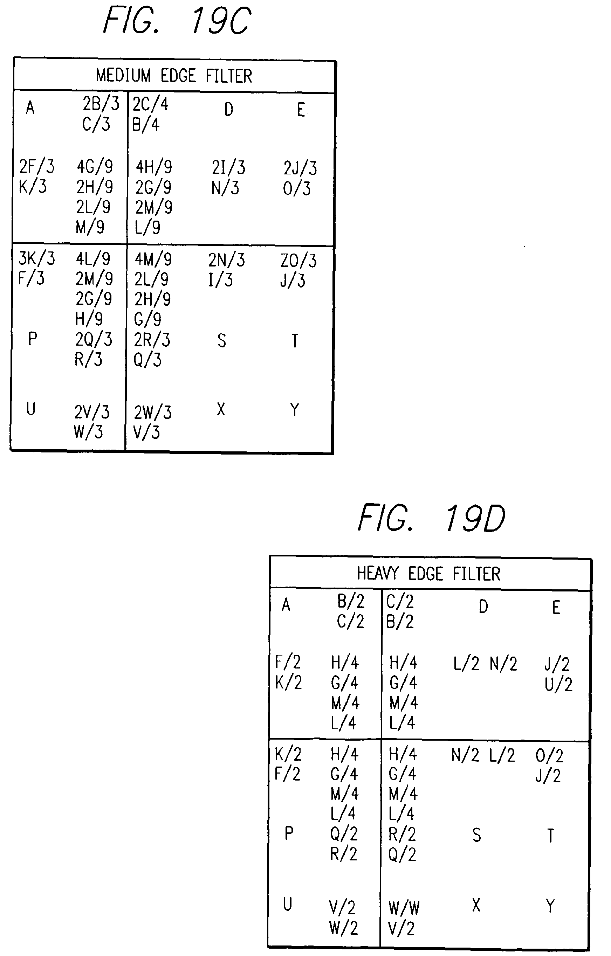

The luminance and chrominance codebooks contain the most often observed delta values - the luminance typically including +25 to -25 and chrominance from -6 to +6. For values that need to be coded and are not found in the selected codebook, an "other" entry at +128 is used, followed by the value, using the number of bits to which the value was quantized, as illustrated in Fig. 19.

Typical codebooks are shown in the following tables.

| Value | Bits | Pattern | Value | Bits | Pattern |
|---|---|---|---|---|---|
| -4 | 3 | 000 | -10 | 6 | 110110 |
| -8 | 4 | 0101 | 9 | 6 | 111101 |
| -7 | 4 | 0100 | 10 | 6 | 111110 |
| -6 | 4 | 1010 | 11 | 6 | 001111 |
| -5 | 4 | 0110 | 12 | 6 | 001110 |
| -3 | 4 | 1110 | 13 | 6 | 110010 |
| 3 | 4 | 1001 | -16 | 7 | 0111011 |
| 4 | 4 | 0010 | ... | ... | ... |
| -9 | 5 | 10111 | -22 | 10 | 1111000111 |
| 5 | 5 | 11010 | -21 | 10 | 1111111101 |
| 6 | 5 | 10110 | -20 | 10 | 1111000110 |
| 7 | 5 | 01111 | -18 | 10 | 1100001001 |
| 8 | 5 | 10000 | -19 | 11 | 11111110101 |
| -11 | 6 | 001100 | -17 | 12 | 111111101001 |

Sample Luminance Codebook

Sample Chrominance Codebook:

| Value | Bits | Pattern   |
|-------|------|-----------|
| -6    | 9    | 000000000 |
| -5    | 8    | 00000001  |
| -4    | 7    | 0000011   |
| -3    | 6    | 000010    |
| -2    | 4    | 0001      |
| -1    | 2    | 01        |

| Value | Bits | Pattern    |
|-------|------|------------|
| 0     | 1    | 1          |
| 1     | 3    | 001        |
| 2     | 6    | 000011     |
| 3     | 7    | 0000001    |
| 4     | 8    | 00000101   |
| 5     | 8    | 00000100   |
| 6     | 10   | 0000000011 |

Each of the four code books used in the compression process (block classification, luminance, chrominance, and group three map) must be translated into a code book lookup for the decompression process. For example, the following classification code book is translated to a code book lookup:

| Block Classification Code Book | | | |
|-------|------------|------|-----------|
| Index | Code       | Bits | Pattern   |
| 0     | Escape     | 9    | 011100000 |
| 1     | Uniform    | 1    | 1         |
| 2     | UniChr     | 2    | 00        |
| 3     | Pattern    | 9    | 011100001 |
| 4     | Null       | 3    | 010       |
| 5     | NullRLE2   | 4    | 0110      |
| 6     | NullRLE3   | 6    | 011101    |
| 7     | NullRLE4   | 6    | 011111    |
| 8     | NullRLE5   | 7    | 0111100   |
| 9     | NullRLE6   | 7    | 0111001   |
| 10    | NullRLE7   | 8    | 01110001  |
| 11    | NullRLE8   | 7    | 0111101   |

| Block Classification Code Book Lookup | | | | | | | | |
|-------|------|-------|------|--|-------|------|-------|----------|
| Index | Link | Value | Code |  | Index | Link | Value | Code     |
| 0     | 2    |       |      |  | 12    |      | 6     | NullRLE3 |

(continued)

| Block Classification Code Book Lookup | | | | | | | | |
|---|---|---|---|---|---|---|---|---|
| Index | Link | Value | Code | | Index | Link | Value | Code |
| 1 | | 1 | Uniform | | 13 | 15 | | |
| 2 | 22 | | | | 14 | | 9 | NullRLE6 |
| 3 | 21 | | | | 15 | 17 | | |
| 4 | 20 | | | | 16 | | 10 | NullRLE7 |
| 5 | 11 | | | | 17 | 19 | | |
| 6 | 8 | | | | 18 | | 3 | Pattern |
| 7 | | 7 | NullRLE4 | | 19 | | 0 | Escape |
| 8 | 10 | | | | 20 | | 5 | NullRLE2 |
| 9 | | 11 | NullRLE8 | | 21 | | 4 | Null |
| 10 | | 8 | NullRLE5 | | 22 | | 2 | UniChr |
| 11 | 13 | | | | | | | |

As bits from a code book entry are retrieved from the compressed image bit stream, the code book lookup is traversed until a node value is found. Each lookup process begins at index zero. If a zero is the next bit retrieved from the bit stream, this index is used. If a one is retrieved, the index is incremented by one. If a value is found at that index, the process is complete with that value. If a link is found, it is used as the new index. In the above example, Block Classification Code Book Lookup, to find a NullRLE6 (Pattern 0111001), the search begins at index zero. A zero is retrieved from the bitstream, so that index zero is used in the lookup, resulting in the finding of a link of two. The next bit is retrieved, which is a one, so the index is incremented to three. The third bit, a one, is retrieved, so that the index is incremented to four. The fourth bit is retrieved, another one, so that the index is incremented to five. The fifth bit, a zero, is retrieved, so that the index five is used to find a link of 11. The sixth bit, a zero, is retrieved, so that the index 11 is used to find a link of 13. The seventh bit, a one, is retrieved, so that the index is incremented to 14. At index 14 a value of 9 is found, which corresponds to NullRLE6.

During the encoding process for each block, the mean, standard deviation, and a selection map are preserved. Those values must now be turned back into sixteen pixels that represent the four-by-four square of original pixels or delta values. Two colors "a" and "b" can be determined from the mean "$\overline{X}$ ", standard

deviation "σ", number of one bits in the selection map "q", and the total number of bits in the selection map (16) "m". The following formula is used for each of the Y, Cr, and Cb components to the "a" color and "b" color.

$$a = \overline{X} - \overline{\sigma}\sqrt{\left[\frac{q}{m-q}\right]}$$

$$b = \overline{X} - \overline{\sigma}\sqrt{\left[\frac{m-q}{q}\right]}$$

Where a one occurs in the selection map, the "a" color is placed in the corresponding pixel position and a "b" color is placed for each zero in the selection map. To reduce the computation required at run-time, the multiplier involving "q" and "m" has been reduced to a lookup table of coefficients for the standard deviation value "σ".

For blocks encoded with an absolute central moment and selection map, step of decompressing preferably comprises determining a first color "a" and a second color "b" for each block of pixels, based upon the absolute central moment and selection map for each block of pixels, where "x" is the sample mean (or central color value, or arithmetic mean), the number of one bits in the selection map darker than the absolute central moment is "q", and the total number of bits in the selection map is "m", according to the following formulas:

$$a = x + d/q$$

$$b = x + d/(m-q)$$

where "d" is the absolute central moment, for each of the Y, Cr, and Cb components of the "a" color and "b" color.

Some patterns for the selection map tend to describe gradient areas of the original image. It is also possible to utilize a map of coefficients to smooth the boundaries between the decoded "a" and "b" colors. For example, where:

Mean = 100
Standard Deviation = -10
Selection Map = 0x137F

$$a = 100 - (-10) \times 1.291 = 113$$

$$b = 100 + (-10) \times 0.775 = 92$$

The unadjusted values, coefficients and adjusted values are shown in the following table:

| Unadjusted Values | | | | Coefficients | | | | Adjusted Values | | | |
|---|---|---|---|---|---|---|---|---|---|---|---|
| 92 | 92 | 92 | 113 | 120% | 100% | 80% | 80% | 91 | 92 | 94 | 110 |
| 92 | 92 | 113 | 113 | 100% | 80% | 80% | 100% | 92 | 94 | 110 | 113 |
| 92 | 113 | 113 | 113 | 80% | 80% | 100% | 120% | 94 | 110 | 113 | 115 |
| 113 | 113 | 113 | 113 | 80% | 100% | 120% | 140% | 110 | 113 | 115 | 118 |

The background color is retrieved from the beginning of the data stream. For each level two block, the level two data is retrieved from the data stream and decoded and added to the background color. For some blocks no level one data is stored. In those blocks, the resulting value for the level two data and background data is replicated for each of the sixteen pixels in that level one block. Where present, sixteen level one blocks will be retrieved from the data stream, decoded, and then added to the pixel value from the level two block.

Three types of post processing filters, a depth filter (light, medium, or heavy), an edge filter (light, medium, or heavy), and a spatial filter (five-pixel light, medium, or adaptive) or a combination of any one from each of the categories can be used. The depth filters remove the "cartoon" look from areas of the image where a single uniform color has been decoded. Small variations in the luminance component are injected into the decoded image. Variations are selected randomly from the following sixteen values based upon the level of filtering specified:

For a light level of filtering, the values typically are:

| -3 | -2 | -2 | -1 | -1 | -1 | 0 | 0 | 0 | 0 | 1 | 1 | 1 | 2 | 2 | 3 |
|---|---|---|---|---|---|---|---|---|---|---|---|---|---|---|---|

For a medium level of filtering, the values typically are:

| -6 | -4 | -3 | -2 | -2 | -1 | -1 | -1 | 1 | 1 | 1 | 2 | 2 | 3 | 4 | 6 |
|---|---|---|---|---|---|---|---|---|---|---|---|---|---|---|---|

For a heavy level of filtering, the values typically are:

| -8 | -6 | -5 | -4 | -3 | -2 | -1 | -1 | 1 | 1 | 2 | 3 | 4 | 5 | 6 | 8 |
|---|---|---|---|---|---|---|---|---|---|---|---|---|---|---|---|

The edge filters serve to mask the artifacts occurring at the edges of the four-by-four-pixel level one blocks. The pixels away from the edges are not affected. The tables in Figs. 19A to D illustrate the three levels of filtering where a horizontal block boundary occurs between the F-J and K-O rows and a vertical boundary between the B-V and C-W columns.

The spatial filters operate as conventional convolution filters. A special set of convolution masks has been selected to make the filters easier to implement with less computing power. In this special set, only five pixels are used (the central target pixel and one each above, below, left, right) and the divisors are multiples of two, typically with the sum of the values of the pixels of the spatial filter being equal to the divisor. In implementing the spatial filter, the central target pixel is matched with the target pixel of the decompressed, decoded image, and the filtered value of the target pixel is determined as the sum of the products of the five pixels of the spatial filter and the corresponding pixels of the decompressed image with relation to the target pixel of the image, divided by the divisor. Other shapes for spatial mask may also be suitable, such as a spherical mask, for example. The following charts show the convolution masks for the light and medium five-pixel spatial filters:

| Light Spatial-5 Filter | | | |
|---|---|---|---|
| 1/8 | 0 | +1 | 0 |
| | +1 | +4 | +1 |
| | 0 | +1 | 0 |

| Medium Spatial-5 Filter | | | |
|---|---|---|---|
| 1/4 | 0 | +1 | 0 |
| | +1 | 0 | +1 |
| | 0 | +1 | 0 |

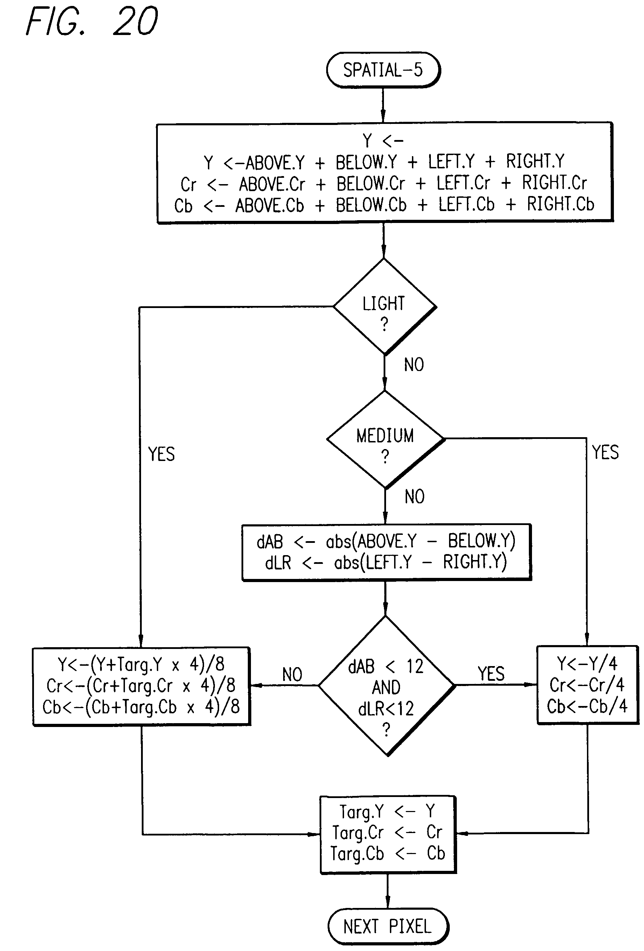

The adaptive filter is a combination of the light and medium versions where the medium filter is used where the difference between the surrounding pixels is significant. The flowchart of Fig. 20 shows one implementation of these filters.

Another presently preferred aspect of the method of the invention further involves the step of converting the YCrCb color space image data back to the original color image color space. In a presently preferred variation, this can comprise converting the YCrCb color space image data back to the RGB color space, and this preferably involves utilizing lookup tables of selected color values for color space conversion. In a preferred aspect, five 256-entry lookup tables are utilized.

It should be readily apparent that the method and system of the invention is also applicable to grayscale images, and other monochromatic images and chromatic image systems with pixels having scalar values. It will be apparent from the foregoing that while particular forms of the invention have been illustrated and described, various modifications can be made without departing from the spirit and scope of the invention. Accordingly, it is not intended that the invention be limited, except as by the appended claims.

**Claims**

1.  A method for digital compression of an image for storage or transmission of the image, said image containing image data consisting of a plurality of scan lines of pixels with scalar values, comprising the steps of:

    filtering the image data by evaluating the scalar values of individual pixels in the image with respect to neighboring pixels; and
    statistically encoding the image data by dividing the image into an array of 4x4 squares of pixels, and encoding each 4x4 square of pixels into a fixed bitlength block containing a central color value, color dispersion value, and a selection map that represent the sixteen pixels in the block.

2.  The method of Claim 1, wherein each said block contains a central color value and a color dispersion value.

3.  The method of Claim 2, wherein said step of statistically encoding the image data comprises determining a first sample moment of each block as the arithmetic mean of the pixels in the block, and said central color value of each said block is set to the arithmetic mean from the first sample moment of the pixels in the block.

**4.** The method of Claim 3, further comprising the step of determining a second sample moment of the pixels in the block, and determining said color dispersion value of each said block by determining the standard deviation from said first and second sample moments.

**5.** The method of Claim 3, further comprising the step of determining a first absolute moment by determining an average of the difference between said pixel values and said first sample moment, and wherein said color dispersion value is set to said first absolute moment.

**6.** The method of Claim 1, wherein said step of statistically encoding the image data comprises determining a first sample moment of each block as the arithmetic mean of the pixels in the block, determining a second sample moment of the pixels in the block, and determining said selection map from those pixels in the block having values lighter or darker than the first sample moment.

**7.** The method of Claim 1, wherein said step of statistically encoding the image data comprises determining a first sample moment of each block as the arithmetic mean of the pixels in the block, determining a second sample moment of the pixels in the block, and determining said selection map from those pixels in the block having values lighter or darker than the average of the lightest and darkest pixels in the block.

**8.** The method of Claim 1, wherein said step of statistically encoding the image data comprises dividing the image into an array of 4x4 squares of pixels, and multi-level encoding the central color values of each 4x4 square of lower level blocks.

**9.** The method of Claim 8, wherein said step of multi-level encoding is repeated until from four to fifteen blocks remain on each axis of a top level of blocks.

**10.** The method of Claim 9, wherein said top level of blocks is reduced to residuals from a fixed background color.

**11.** The method of Claim 8, wherein each successive lower level block is reduced to the residuals from the encoded block on the level above.

**12.** The method of Claim 8, wherein the pixel values are reduced to the residuals from the encoded level one blocks.

**13.** The method of Claim 1, further comprising the step of adding compressed residuals between input pixel data and level-one decoded blocks to thereby provide loss-less digital compression of the image.

**14.** The method of Claim 1, further comprising the step of decompressing each said block.

**15.** The method of Claim 14, wherein said step of decompressing comprises decompressing each said block by codebook decompression.

**16.** The method of Claim 14, for a datastream in level order, wherein said step of decompressing comprises decoding said blocks in level order by decoding all of the blocks in a level of blocks according to level, progressing from the highest level to the lowest level of blocks.

**17.** The method of Claim 14, for a datastream in block order, wherein said step of decompressing comprises decoding blocks in block order, by decoding each top level block in succession, and progressively decoding each of the lower level blocks within the top level block before decoding each successive top level block, and displaying selected portions of the image without processing unneeded blocks.

**18.** The method of Claim 14, wherein said step of decompressing comprises restoring the components of said blocks to the original number of bits based upon block classification.

**19.** The method of Claim 14, for blocks encoded with a mean, standard deviation, and selection map, wherein said step of decompressing comprises the steps of determining a first color "a" for each block of pixels, based upon the mean, standard deviation, and selection map for each said block of pixels, and placing the first color "a" color in the corresponding pixel position where a one occurs in the selection map.

**20.** The method of Claim 14, for blocks encoded with a mean, standard deviation, and selection map, wherein said step of decompressing comprises the steps of determining a second color "b" for each block of pixels, based upon the mean, standard deviation, and selection map for each said block of pixels, and placing the second color "b" in the corresponding pixel position where a zero occurs in the selection map.

21. The method of Claim 14, for blocks encoded with a mean, standard deviation, and selection map, wherein said step of decompressing comprises determining a first color "a" and a second color "b" for each block of pixels, based upon the mean, standard deviation, and selection map for each said block of pixels, where the mean is "$\overline{X}$", the standard deviation "$\overline{\sigma}$", the number of one bits in the selection map darker than the mean is "q", and the total number of bits in the selection map is "m", according to the following formulas:

$$a = \overline{X} - \overline{\sigma}\sqrt{\left[\frac{q}{m-q}\right]}$$

$$b = \overline{X} - \overline{\sigma}\sqrt{\left[\frac{m-q}{q}\right]}$$

for each of the Y, Cr, and Cb components of the "a" color and "b" color.

22. The method of Claim 21, further comprising the step of utilizing a lookup table of coefficients for the multiplier involving "q" and "m" for the standard deviation value "$\overline{\sigma}$" to reduce computation time.

23. The method of Claim 14, for blocks encoded with an absolute central moment and selection map, wherein said step of decompressing comprises determining a first color "a" and a second color "b" for each block of pixels, based upon the absolute central moment and selection map for each said block of pixels, where "x" is the sample mean (or central color value, or arithmetic mean), the number of one bits in the selection map darker than the absolute central moment is "q", and the total number of bits in the selection map is "m", according to the following formulas:

$$a = x + d/q$$

$$b = x + d/(m-q)$$

where "d" is the absolute central moment, for each of the Y, Cr, and Cb components of the "a" color and "b" color.

24. The method of Claim 21, further comprising the step of utilizing a map of coefficients to smooth the boundaries between the decoded "a" and "b" colors to describe gradient areas of the original image.

25. The method of Claim 14, wherein said step of decompressing further comprises the step of processing the image by layering a plurality of filters.

26. The method of Claim 25, wherein said step of processing the image by layering a plurality of filters comprises the step of filtering areas of the decompressed image to introduce variations in luminance to a decoded uniform color portion of the decompressed image.

27. The method of Claim 25, wherein said step of processing the image by layering a plurality of filters comprises the step of filtering edges of said blocks of the decompressed image to mask artifacts occurring at the edges of the blocks.

28. The method of Claim 25, wherein said step of processing the image by layering a plurality of filters comprises the step of filtering areas of the decompressed image utilizing a convolution mask around a selected target pixel in an area of the decompressed image, the convolution mask consisting of five pixels including the target pixel, one pixel above the target pixel, one pixel below the target pixel, one pixel to the left of the target pixel, and one pixel to the right of the target pixel, and the divisors are multiples of two, matching the central target pixel with the target pixel of the decoded image, and determining the filtered value of a target pixel of the decompressed image as the sum of the products of the five pixels of the spatial filter and the corresponding pixels of the decoded image with relation to the target pixel of the image, divided by the divisor.

29. The method of claim 14, further comprising the step of converting the YCrCb color space image data back to the original color image color space.

30. The method of claim 14, further comprising the step of converting the YCrCb color space image data back to the original image or other desired color space.

31. The method of claim 30, wherein said step of converting the YCrCb color space image data comprises converting the image data to the RGB color space utilizing lookup tables of selected color values for color space conversion.

32. The method of claim 31, wherein said step of converting the YCrCb color space image data to the RGB color space comprises utilizing five 256-entry lookup tables.

33. The method of Claim 1, further comprising the step of replacing background in the image being compressed with a scalar value by setting an initial chromakey value and delta values, in order to reduce noise in the image, and to increase the visual quality of the compressed image, and wherein said step of replacing background in the image being compressed comprises determining an initial chromakey mask of pixels in the input image that are near the chromakey value.

34. The method of Claim 33, wherein three delta components describe a rectangular region in YCrCb color space.

35. The method of Claim 33, wherein one delta component describes a spherical region in YCrCb color space.

36. The method of Claim 33, wherein three delta components describe a hollow cylindrical segment in HSV color space.

37. The method of Claim 33, further comprising the step of removing artifacts from said initial chromakey mask.

38. The method of Claim 37, wherein said step of removing artifacts comprises the steps of:

> a) initially determining said background mask set of pixels;
> b) removing pixels from said mask set that have less than a predetermined threshold of neighboring pixels included in said mask set;
> c) adding pixels to said mask set that have more than a predetermined threshold of neighboring pixels included in said mask set; and repeating steps b) and c) a plurality of times.

39. The method of Claim 37, wherein said step of removing artifacts comprises the steps of:
applying a sliding linear filter of five pixels once horizontally and once vertically to adjust a plurality of target pixels of said initial chromakey mask, and adjusting each target pixel to be included in the chromakey mask if the target pixel is initially not included in the chromakey mask, the pair of pixels on either side of the target pixel are in the chromakey mask, and the target pixel is not near an edge; adjusting each target pixel to be included in the chromakey mask if the target pixel is initially not included in the chromakey mask, and the two adjacent pixels on either side of the target pixel are included in the chromakey mask; adjusting each target pixel to be included in the chromakey mask if the target pixel is initially not included in the chromakey mask, and if three of the adjacent pixels a distance of two or less pixels away from the target pixel are included in the chromakey mask; adjusting each target pixel to be excluded from the chromakey mask if the target pixel is initially included in the chromakey mask, and if both pairs of pixels on either side of the target pixel are not included in the chromakey mask.

40. The method of Claim 1, wherein said step of statistically encoding the color image data comprises encoding two levels of blocks of each 4x4 square of pixels, said two levels including level one blocks and level two blocks, said level two blocks including central color values.

41. The method of Claim 40, wherein said level two blocks are reduced to residuals from a fixed background color.

**42.** The method of Claim 40, wherein said level one blocks are reduced to residuals from decoded level two blocks.

**43.** The method of Claim 1, further comprising the step of preparing a datastream for storage or transmission in block order.

**44.** The method of Claim 43, wherein said step of preparing a datastream for storage or transmission in block order comprises selecting a block order to first process those portions of the image that are most important to facial identification.

**45.** The method of Claim 43, wherein said block order provides a circle group layout.

**46.** The method of Claim 45, wherein the corners of the image are truncated.

**47.** The method of Claim 43, wherein said block order provides an oval group layout.

**48.** The method of Claim 47, wherein the comers of the image are truncated.

**49.** The method of Claim 43, wherein said block order provides a bell group layout.

**50.** The method of Claim 49, wherein the corners of the image are truncated.

**51.** The method of Claim 43, wherein said step of preparing a datastream for storage or transmission in block order comprises dividing said blocks into groups.

**52.** The method of Claim 51, wherein said step of dividing said blocks into groups comprises assigning a portion of the maximum compressed bytes to each group.

**53.** The method of Claim 51, wherein said step of dividing said blocks into groups comprises adjusting quality-controlling thresholds upon completion of each group.

**54.** The method of Claim 51, wherein said step of dividing said blocks into groups comprises transmitting only level two block information on the blocks of the last group to be processed if the information is near a maximum limit of compressed bytes.

**55.** The method of Claim 51, wherein said step of dividing said blocks into groups comprises repeating compression of the image starting at a lower quality level if necessary to process the entire image into a maximum limit of compressed bytes.

FIG. 1
PRIOR ART

CYAN

100%

WHITE

GREEN

YELLOW

100%

BLUE

BLACK

MAGENTA

RED

100%

100%

GREY

VALUE

GREEN

SATURATION

0%

HUE

BLUE

RED

FIG. 2
PRIOR ART

Y

WHITE

100%

GREEN

GREY

BLUE

−Cr

+Cb

0%

BLACK

−Cb

RED

+Cr

FIG. 3
PRIOR ART

FIG. 4

EP 1 100 049 A2

COMPRESSOR

```
IMAGE
ACQUISITION
```

```
PRE-PROCESSING
FILTERS
```

```
CHROMAKEY
```

```
MULTI-LEVEL
ENCODING
```

```
CODEBOOK
COMPRESSION
```

```
SMART CARD
READER/WRITER
```

```
IMAGE
DATABASE
```

```
1K OR 2K
CONTACTLESS
SMART CARD
```

DECOMPRESSOR

```
SMART CARD
READER
```

```
CODE BOOK
LOOKUP
DECOMPRESSION
```

```
MULTI-LEVEL
DECODING
```

```
POST-PROCESSING
FILTERS
```

```
IMAGE
DISPLAY
```

*FIG. 5*

*FIG. 6*

OUTPUT
AVG (ABDE)

*FIG. 7*

OUTPUT
AVG (ABDE)

OUTPUT
AVG (ABDE)

FIG. 8

FIG. 9

FIG. 10

PRE—FILTER

THRESHOLDS SET BY APPLICATION:
$T_E$ ← EDGE THRESHOLD=
$T_U$ ← UNIFORM THRESHOLD=
$T_0$ ← OVERSHOOT THRESHOLD=

*FIG. 11A*

ROW ← 0

NEXT ROW

B ← C ← D ← PIXEL (ROW,0)
dBC ← dCD ← dDE ← 0
E ← PIXEL (ROW, 1)
Col ← 0

NEXT Col

A ← B, B ← C, C ← D, D ← E
dAB ← dBC, dBC ← dCD
dCD ← dDE

Col < NumCol −2 ?  — YES → E ← Pixel (ROW, Col+2)

dDE = D Δ E
dBD = B Δ D
aAB = Avg (A,B)
aDE = Avg (D,E)

dAB<Tu
AND dBD<Tu
AND dDE<Tu
? — NO → A

OUTPUT Pixel
Avg (aAB, aDE)

*FIG. 11B*

*FIG. 11C*

B

```
        dAB < T_E
          AND
        dBC < T_E
           ?
```

NO

YES

```
OUTPUT PIXEL
Avg (C, aAB)
```

END
Col

```
        dCD < T_E
          AND
        dDE < T_E
           ?
```

NO

C

YES

```
OUTPUT PIXEL
Avg (C, aDE)
```

END
Col

# FIG. 11D

FIG. 11E

# FIG. 11F

PIXELS FOR AUTOMATIC
AND AUTOACCUM
CHROMAKEY

*FIG. 12A*

```
        ┌─────────────┐
        │    BASIC     │
        │   ENCODE     │
        └──────┬──────┘
               │
        ┌──────▼──────────┐
        │ COLLECT 4X4 BLOCK OF │
        │   YCrCb PIXELS INTO   │
        │  16 ELEMENT BUFFER    │
        └──────┬──────────┘
               │
        ┌──────▼──────────┐
        │      i ← 0       │
        │  Y ← Cr ← Cb ← 0  │
        │ Y2 ← Cr2 ← Cb2 ← 0 │
        └──────┬──────────┘
```

$$Y \leftarrow Y + BUFFER[i].Y$$
$$Y2 \leftarrow Y2 + SQUARE(BUFFER[i].Y)$$
$$Cr \leftarrow Cr + (BUFFER[i].Cr$$
$$Cr2 \leftarrow Cr2 + SQUARE(BUFFER[i].Cr)$$
$$Cb \leftarrow Cb + BUFFER[i].Cb$$
$$Cb2 \leftarrow Cb2 + SQUARE(BUFFER[i].Cb)$$

$$i \leftarrow i + 1$$

YES      i < 16      NO

$$dy = ROOT\ (Y2\ /\ 16 - SQUARE12(Y)\ /\ 256)$$
$$dCr = ROOT\ (Cr2\ /\ 16 - SQUARE12(Cr)\ /\ 258)$$
$$dCb = ROOT\ (Cb2\ /\ 16 - SQUARE12(Cb)\ /\ 256)$$

$$mY = Y\ /\ 16$$
$$mCb = Cb\ /\ 16$$
$$mCr = Cr\ /\ 16$$

A

*FIG. 12B*

A

```
i = 0
sCr = 0
Map = 0
sCb = 0
```

SHIFT MAP
LEFT 1 BIT

BUFFER [i].Y < mY
? — NO

YES

SET LSB OF MAP
sCr ← sCr + (mCr − BUFFER[i].Cr)
sCb ← sCb + (mCb − BUFFER[i].Cb)

i ← i + 1

i < 16
?

NO

sCr < 0
?

YES — dCr ← −dCr

NO

sCb < 0
?

YES — dCb ← −dCb

NO

YES

B

## FIG. 12C

```
                         ┌─┐
                         │B│
                         └┬┘
                          │
                          ▼
                        ╱MAP = 0╲         YES      ┌──────────┐
                       ╱    ?    ╲──────────────▶  │ dY  ← 0  │
                       ╲         ╱                 │ dCr ← 0  │
                        ╲       ╱                  │ dCb ← 0  │
                         NO                        └──────────┘
                          │
                          ▼
                      ╱dY, dCr, dCb╲      YES      ┌──────────┐
                     ╱  ALL ZERO    ╲─────────────▶│ MAP ← 0  │
                     ╲      ?        ╱             └──────────┘
                      ╲            ╱
                        NO
                          │
                          ▼
                       ╱ MSB OF ╲        NO
                      ╱ MAP SET  ╲──────────────────────────
                      ╲    ?     ╱
                       ╲        ╱
                         YES
                          │
                          ▼
                    ┌──────────────┐
                    │  INVERT MAP  │
                    │  dY  ← −dY   │
                    │  dCr ← −dCr  │
                    │  dCb ← −dCb  │
                    └──────────────┘
                          │
                          ▼
                ┌──────────────────────┐
                │ OUTPUT mY, mCr, mCb,  │
                │ dY, dCr, dCb, AND MAP │
                └──────────────────────┘
                          │
                          ▼
                    ╭──────────────╮
                    │  END BASIC   │
                    │   ENCODE     │
                    ╰──────────────╯
```

*FIG. 13*

CLASS CODEBOOK

0 = ESCAPE
1 = UNIFORM
2 = UNIFORM CHROMA
3 = PATTERN
4 = NULL
5 = NULL X2
6 = NULL X3
7 = NULL X4
8 = NULL X5
9 = NULL X6
10 = NULL X7
11 = NULL X8

UNIFORM CHROMA

PATTERN

NULL          UNIFORM

CHROMA CODEBOOK $\sigma_{cr}$

CHROMA CODEBOOK $\sigma_{cb}$

LUMINANCE CODEBOOK $\sigma_y$

⓪   OOFF     ⓿⓿   GROUP 1

①   3333

⓿⓿   OFFF     ⓿①   GROUP 2

⓿①   7777

①⓿   1111

①①   OOOF

GROUP 3 MAP CODEBOOK   ①⓿   GROUP 3

MAP 15-BITS   ①①   GROUP 4

CHROMA CODEBOOK $\overline{Cr}$

CHROMA CODEBOOK $\overline{Cb}$

LUMINANCE CODEBOOK $\overline{Y}$

DONE

*FIG. 14A*

```
            ( COMPRESS BLOCK )
                    │
                    ▼
┌───────────────────────────────────────────────────┐
│ COLLECT DATA FOR THIS BLOCK:                        │
│ TYUNI    ◄──  UNIFORM LUMINANCE THRESHOLD           │
│ TCUNI    ◄──  UNIFORM CHROMINANCE THRESHOLD         │
│ TYNULL   ◄──  NULL LUMINANCE THRESHOLD              │
│ TCNULL   ◄──  NULL CHROMINANCE THRESHOLD            │
│ TMAP     ◄──  MAP ERROR THRESHOLD                   │
│ MAPGRP   ◄──  MAP GROUP PARAMETER                   │
│ BYPAT    ◄──  PATTERN LUMINANCE BITS                │
│ BCPAT    ◄──  PATTERN CHROMINANCE BITS              │
│ BYUNI    ◄──  UNIFORM LUMINANCE BITS                │
│ BCUNI    ◄──  UNIFORM CHROMINANCE BITS              │
│ mY       ◄──  BLOCK MEAN LUMINANCE                  │
│ mCr      ◄──  BLOCK MEAN Cr CHANNEL                 │
│ mCb      ◄──  BLOCK MEAN Cb CHANNEL                 │
│ dY       ◄──  BLOCK STD. DEV. LUMINANCE             │
│ dCr      ◄──  BLOCK STD. DEV. Cr CHANNEL            │
│ dCb      ◄──  BLOCK STD. DEV. Cb CHANNEL            │
│ MAP      ◄──  BLOCK SELECTION MAP                   │
└───────────────────────────────────────────────────┘

┌───────────────────────────────────────────────────┐
│                INITALIZE VALUES:                    │
└───────────────────────────────────────────────────┘
                    │
                    ▼
                  ⟨ A ⟩
```

*FIG. 14B*

```
         ╱A╲
          │
          ▼
┌──────────────────────────┐
│ b ◄── BIT COUNT OF MAP   │
└──────────────────────────┘
          │
          ▼
       ╱ b < TMAP ╲          ┌────────────────────────────────┐
      ╱   OR       ╲  YES    │ dY ◄── dCr ◄── dCB ◄── MAP ◄── 0│
      ╲ b > 16-TMAP╱ ───────►│                                │
       ╲    ?     ╱          └────────────────────────────────┘
          │                              │
          │ NO                           ▼
          │                            ╱B╲
          ▼                             │
┌──────────────────────────────────────────────────────────────┐
│ REDUCE mY  TO BYUNI BITS      REDUCE dY  TO BYPAT BITS         │
│ REDUCE mCr TO BCUNI BITS      REDUCE dCr TO BCPAT BITS         │
│ REDUCE mCb TO BCUNI BITS      REDUCE dCb TO BCPAT BITS         │
└──────────────────────────────────────────────────────────────┘
          │
          ▼
       ╱ MAP = 0 ╲   NO      ╱ FIND NEW MAP USING ╲
      ╱    ?      ╲ ────────►│ MAP, TMAP, MAPGRP   │   (FIG. 15)
       ╲         ╱           │ SAVING NEW MAP,     │
          │                  ╲ MAP BIT CODE       ╱
          │ YES                       │
          │                           ▼
          │                    ╱ BIT COUNT ╲
          │     NO            ╱  OF MAP TO   ╲
          │◄─────────────────╱   NEW MAP      ╲
          │                  ╲   CHANGED      ╱
          │                   ╲     ?        ╱
          │                           │
          │                           │ YES
          │                           ▼
          │    ┌──────────────────────────────────────────────────────────┐
          │    │             ADJUST dY, dCr, dCb BY                        │
          │    │  √(16-BIT COUNT (NEW MAP)) / BIT COUNT (NEW MAP)          │
          │    │  ───────────────────────────────────────────────          │
          │    │     √(16-BIT COUNT (MAP)) / BIT COUNT (MAP)               │
          │    └──────────────────────────────────────────────────────────┘
          │                           │
          │◄──────────────────────────┘
          ▼
        ╱B╲
```

FIG. 14C

B

ABS(dCr)
> TCUNI
OR
ABS(dCb)
>TCUNI
?

YES → CLASS ← 3 (PATTERN)

NO

dCr ← 0
dCb ← 0

ABS(dY)
>
TYUNI
?

YES → CLASS ← 2 (UNI CHR)

NO

dY ← 0

ABS(mY>TYNULL
OR ABS(mCr)>TCNULL
OR ABS(mCb)>TCNULL?

YES → CLASS ← 1 (UNIFORM)

NO

mY ← mCr ←
mCb ← 0

CLASS ← 0 (NULL)

C

FIG. 14D

C

CLASS = 0 ? — NO → NULL COUNT > 0 ?

YES

NULL COUNT ← NULL COUNT + 1

NULL COUNT < 8 ? — YES → DONE

NO

CLASS ← 11 (NULL RLE 8)

NULL COUNT ← 0

NULL COUNT > 0 ? — YES

EMIT CLASS CODEBOOK ENTRY 3 + NULL COUNT

NULL COUNT ← 0

EMIT CLASS

D

FIG. 14E

```
        (D)
         |
         v
      /CLASS\    YES    +------------------+
     < = 3    >-------->| EMIT CHROMA      |
      \  ?  /           |      dCr         |
         |              +------------------+
        NO                       |
         |                       v
         |              +------------------+
         |              | EMIT CHROMA      |
         |              |      dCb         |
         |              +------------------+
         v                       |
      /CLASS\    YES             v
     < = 2    >-------->+------------------+
      \  ?  /           | EMIT LUMINANCE   |
         |              |       dY         |
        NO              +------------------+
         |                       |
         |                       v
         |              +------------------+
         |              | EMIT NEW MAP     |
         |              |   BIT CODE       |
         |              +------------------+
         v                       |
      /CLASS\    YES             v
     < = 1    >-------->+------------------+
      \  ?  /           | EMIT CHROMA      |
         |              |      mCr         |
         |              +------------------+
         |                       |
         |                       v
         |              +------------------+
         |              | EMIT CHROMA      |
         |              |      mCb         |
         |              +------------------+
         |                       |
         |                       v
         |              +------------------+
         |              | EMIT LUMINANCE   |
         |              |       mY         |
         |              +------------------+
         |                       |
   (DONE)                        v
     |                  ( END COMPRESS BLOCK )
     +------------------------->
```

FIND MAP

*FIG. 15A*

i ← 0
j ← 16
k ← -1

X ← MAP XOR MAP GROUP 1[i]

Y ← BIT COUNT (X)

Y < j
?

YES

k ← i
j ← y

NO

i ← i + 1

NO

Y = 0
?

i <
NUMBER OF
GROUP 1 MAPS
?

YES

NO

YES

ASSUMES TWO ENTRIES
IN GROUP ONE

j < TMAP
OR
MAPGRP ≦ 1
?

YES

BIT CODE ← k
BIT CODE LEN ← 3
MAP OUT ← MAP GROUP 1 [k]

NO

A

DONE    FIG. 15D

*FIG. 15B*

A

i ← 0
j ← 16
k ← −1

X ← MAP XOR MAP GROUP 2[i]

Y ← BIT COUNT (X)

Y < j
?

YES →

k ← i
j ← y

NO

i ← i + 1

Y = 0
?

NO ←

YES

i <
NUMBER OF
GROUP 2 MAPS
?

YES

NO

ASSUMES FOUR ENTRIES
IN GROUP TWO

j < TMAP
OR
MAPGRP ≦ 2
?

YES →

BIT CODE ← $0100_B$+K
BIT CODE LEN ← 4
MAP OUT ← MAP GROUP 2 [k]

NO

B

DONE    FIG. 15D

B

FIG. 15C

i ← 0
j ← 16
k ← −1

X ← MAP XOR MAP GROUP 3[i]

Y ← BIT COUNT (X)

Y < j ? —— YES —→ k ← i
j ← y

NO

i ← i + 1 —— NO —— Y = 0 ?

i < NUMBER OF GROUP 3 MAPS ? —— YES

NO

YES

j < TMAP OR MAPGRP ≤ 3 ? —— YES —→ BIT CODE ← $10_B$ CONCATENATED WITH GROUP 3 CODE [i]
BIT CODE LEN ← 2 + GROUP 3 LEN [i]
MAP OUT ← MAP GROUP 3 [i]

NO

C

DONE    FIG. 15D

# FIG. 15D

C

BIT CODE ← 11000000000000000$_B$ + MAP
BIT CODE LEN ← 17
MAP OUT ← MAP

DONE → RETURN BIT CODE,
BITCODE LEN, + MAP

# FIG. 16

EMIT CHROMA OR EMIT LUM

VALUE FOUND IN CODEBOOK ? —NO→ +128 FOUND IN CODEBOOK ? —NO→

YES

YES

ADD CODE FROM CODEBOOK TO BITSTREAM

ADD CODE FOR +128 TO BITSTREAM → ADD VALUE TO BITSTREAM

DONE

FIG. 17A

ADAPTIVE
COMPRESSION
ITERATIONS

START Q < INITIAL Q

QUALITY < START Q
BLKINDEX <-0
GROUP <-0

NEW
GROUP
?

YES

QUALITY
=
INITIAL Q
?

NO

DECREMENT
QUALITY

YES

NO

BYTES>
TARGET GROUP[i]
?

YES

DECREMENT
QUALITY

INCREMENT
GROUP

NO

COMPRESS
L2 BLOCK

FIG. 17B

# FIG. 18

BACKGROUND COLOR

LEVEL TWO
BLOCK DATA

BLOCK DATA
FOR EACH OF
SIXTEEN LEVEL
ONE BLOCKS

ESCAPE 0:
END OF DATA

ESCAPE 1:
NO LEVEL ONE

# FIG. 19A

| INPUT | | | | |
|---|---|---|---|---|
| A | B | C | D | E |
| F | G | H | I | J |
| K | L | M | N | O |
| P | Q | R | S | T |
| U | V | W | X | Y |

# FIG. 19B

| LIGHT EDGE FILTER | | | | |
|---|---|---|---|---|
| A | 3B/4<br>C/4 | 3C/4<br>B/4 | D | E |
| 3F/4<br>K/4 | 9G/16<br>3H/16<br>3L/16<br>M/16 | 9H/16<br>3G/16<br>3M/16<br>L/16 | 3L/4<br>N/4 | 3J/4<br>O/4 |
| 3K/4<br>G/4 | 9L/16<br>3M/16<br>3G/16<br>H/16 | 9W/16<br>3L/16<br>3H/16<br>G/16 | 3N/4<br>I/4 | 3O/4<br>J/4 |
| P | 3Q/4<br>R/4 | 3R/4<br>Q/4 | S | T |
| U | 3V/4<br>W/4 | 3W/4<br>V/4 | X | Y |

## FIG. 19C

| MEDIUM EDGE FILTER | | | | |
|---|---|---|---|---|
| A | 2B/3 C/3 | 2C/4 B/4 | D | E |
| 2F/3 K/3 | 4G/9 2H/9 2L/9 M/9 | 4H/9 2G/9 2M/9 L/9 | 2I/3 N/3 | 2J/3 O/3 |
| 3K/3 F/3 | 4L/9 2M/9 2G/9 H/9 | 4M/9 2L/9 2H/9 G/9 | 2N/3 I/3 | ZO/3 J/3 |
| P | 2Q/3 R/3 | 2R/3 Q/3 | S | T |
| U | 2V/3 W/3 | 2W/3 V/3 | X | Y |

## FIG. 19D

| HEAVY EDGE FILTER | | | | |
|---|---|---|---|---|
| A | B/2 C/2 | C/2 B/2 | D | E |
| F/2 K/2 | H/4 G/4 M/4 L/4 | H/4 G/4 M/4 L/4 | L/2 N/2 | J/2 U/2 |
| K/2 F/2 | H/4 G/4 M/4 L/4 | H/4 G/4 M/4 L/4 | N/2 L/2 | O/2 J/2 |
| P | Q/2 R/2 | R/2 Q/2 | S | T |
| U | V/2 W/2 | W/W V/2 | X | Y |

## FIG. 20

```
                    ┌─────────────┐
                    │  SPATIAL-5  │
                    └─────────────┘
                           │
                           ▼
┌──────────────────────────────────────────────────────────────┐
│                          Y <-                                  │
│   Y <-ABOVE.Y  + BELOW.Y  + LEFT.Y  + RIGHT.Y                  │
│   Cr <- ABOVE.Cr + BELOW.Cr + LEFT.Cr + RIGHT.Cr               │
│   Cb <- ABOVE.Cb + BELOW.Cb + LEFT.Cb + RIGHT.Cb               │
└──────────────────────────────────────────────────────────────┘
                           │
                           ▼
                      ◇ LIGHT ? ◇ ──── YES ─────┐
                           │                     │
                          NO                     │
                           ▼                     │
                   ◇ MEDIUM ? ◇ ──── YES ────────┼──┐
                           │                     │  │
                          NO                     │  │
                           ▼                     │  │
        ┌─────────────────────────────────┐     │  │
        │ dAB <- abs(ABOVE.Y - BELOW.Y)    │     │  │
        │ dLR <- abs(LEFT.Y - RIGHT.Y)     │     │  │
        └─────────────────────────────────┘     │  │
                           │                     │  │
                           ▼                     │  │
 ┌────────────────────┐   ◇ dAB < 12 ◇    ┌─────────────┐
 │ Y<-(Y+Targ.Y x 4)/8│── AND ──── NO ◇── │  Y<-Y/4     │
 │ Cr<-(Cr+Targ.Cr x4)/8│  dLR<12  │ YES →│  Cr<-Cr/4   │
 │ Cb<-(Cb+Targ.Cb x4)/8│    ?              │  Cb<-Cb/4   │
 └────────────────────┘                   └─────────────┘
```

- $Y \gets (Y + Targ.Y \times 4)/8$
- $Cr \gets (Cr + Targ.Cr \times 4)/8$
- $Cb \gets (Cb + Targ.Cb \times 4)/8$

dAB < 12 AND dLR<12 ?

- $Y \gets Y/4$
- $Cr \gets Cr/4$
- $Cb \gets Cb/4$

```
                    ┌──────────────────┐
                    │ Targ.Y  <- Y     │
                    │ Targ.Cr <- Cr    │
                    │ Targ.Cb <- Cb    │
                    └──────────────────┘
                           │
                           ▼
                    ┌──────────────┐
                    │  NEXT PIXEL  │
                    └──────────────┘
```